**Europäisches Patentamt**

**European Patent Office**

**Office européen des brevets**

(19)

(11) **EP 1 326 240 A1**

(12) **EUROPEAN PATENT APPLICATION**
published in accordance with Art. 158(3) EPC

(43) Date of publication:
**09.07.2003 Bulletin 2003/28**

(51) Int Cl.⁷: **G11B 7/09**, G11B 7/0065,
G11B 7/135, G11B 7/24,
G03H 1/26, G03H 1/30

(21) Application number: **01974779.9**

(22) Date of filing: **11.10.2001**

(86) International application number:
**PCT/JP01/08916**

(87) International publication number:
**WO 02/031822 (18.04.2002 Gazette 2002/16)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **12.10.2000 JP 2000311466**

(71) Applicant: **Optware Corporation
Yokohama-shi, Kanagawa 222-0033 (JP)**

(72) Inventor: **HORIMAI, Hideyoshi, Optware Corp.,
Nisso 1
Yokohama-shi, Kanagawa 222-0033 (JP)**

(74) Representative: **Grünecker, Kinkeldey,
Stockmair & Schwanhäusser Anwaltssozietät
Maximilianstrasse 58
80538 München (DE)**

(54) **OPTICAL INFORMATION RECORDING APPARATUS AND METHOD, OPTICAL INFORMATION REPRODUCING APPARATUS AND METHOD, OPTICAL INFORMATION RECORDING/REPRODUCING APPARATUS AND METHOD, AND OPTICAL INFORMATION RECORDING MEDIUM**

(57)    An object of the invention is to simplify the configuration of an optical system for recording or reproduction without causing a reduction in the amount of information. For recording, a spatial light modulator (27) generates information light by spatially modulating light according to information to be recorded. The information light is collected by an objective lens (21) and applied to an optical information recording medium (1) while converging to become minimum in diameter on the interface between a transparent substrate (2) and a protective layer (5). Recording-specific reference light is collected by an objective lens (31) and applied to the optical information recording medium (1) while converging to become minimum in diameter on the interface between the transparent substrate (2) and the protective layer (5). In an information recording layer (3), the information light and the recording-specific reference light interfere with each other to form an interference pattern. This interference pattern is volumetrically recorded in the information recording layer (3).

FIG. 1

## Description

TECHNICAL FIELD

The present invention relates to an optical information recording apparatus and method for recording information in an optical information recording medium through the use of holography, an optical information reproducing apparatus and method for reproducing information from an optical information recording medium through the use of holography, an optical information recording/reproducing apparatus and method for recording information in an optical information recording medium and reproducing the information from the optical information recording medium through the use of holography, and an optical information recording medium in which information is recorded through the use of holography.

BACKGROUND ART

In general, holographic recording for recording information in a recording medium through the use of holography is performed by superimposing light that carries image information on reference light within the recording medium and by writing a resultingly generated interference pattern into the recording medium. For reproducing the information recorded, the recording medium is irradiated with reference light such that the image information is reproduced through diffraction derived from the interference pattern.

In recent years, volume holography, or digital volume holography in particular, has been developed and is attracting attention in practical fields for ultra-high density optical recording. Volume holography is a method for writing a three-dimensional interference pattern by making positive use of a recording medium in a direction of its thickness as well, and has a feature that it is possible to enhance the diffraction efficiency by increasing the thickness of the medium, and a greater recording capacity can be achieved by employing multiplex recording. Digital volume holography is a computer-oriented holographic recording method which uses the same recording medium and recording method as with the volume holography, whereas the image information to be recorded is limited to binary digital patterns. In the digital volume holography, analog image information such as a picture is once digitized and developed into two-dimensional digital pattern information, and then it is recorded as image information. For reproduction, this digital pattern information is read and decoded to restore the original image information for display. Consequently, even if the signal-to-noise ratio (hereinafter referred to as SN ratio) during reproduction is somewhat poor, it is possible to reproduce the original information with extremely high fidelity by performing differential detection and/or error correction on the binary data encoded.

In conventional optical information recording/reproducing methods that use holography, information light and recording-specific reference light are often allowed to be incident on the recording medium with a predetermined angle therebetween so that an interference pattern resulting 'from interference between the information light and the recording-specific reference light is recorded in the recording medium. Consequently, reproduction light that occurs at the time of reproduction travels at a predetermined angle with respect to reproduction-specific reference light.

However, when the information light and the recording-specific reference light are allowed to be incident on the recording medium with a predetermined angle therebetween at the time of recording so as to generate the reproduction light that travels at a predetermined angle with respect to the reproduction-specific reference light at the time of reproduction as described above, there arises a problem that the optical system for recording and reproduction becomes complicated.

Published Unexamined Japanese Patent Application (KOKAI) Heisei 10-124872 discloses a technique of applying information light and reference light to the same side of an information recording layer in which information is to be recorded through the use of holography such that they converge at different positions in the direction of thickness of the information recording layer, thereby recording an interference pattern obtained between the information light and the reference light in the information recording layer. This technique, however, has a problem that a special optical system is required for allowing the information light and the reference light to converge at different positions.

Published Unexamined Japanese Patent Application (KOKAI) Heisei 10-124872 mentioned above also discloses a technique in which a part of the cross section of the beam to be applied to the recording medium is spatially modulated to form information light while reference light is formed of the other part of the cross section of the beam, and an interference pattern generated therebetween is recorded in the information recording layer. This technique uses a recording medium that has a reflecting surface on a side of the information recording layer opposite to the incidence side for the information light and the reference light. An interference pattern generated between the information light yet to impinge on the reflecting surface and the reference light reflected by the reflecting surface, and an interference pattern generated between the reference light yet to impinge on the reflecting surface and the information light reflected by the reflecting surface are recorded in the information recording layer. This technique, however, has a problem that the amount of information recordable is reduced because information can be carried by only a part of the cross section of the beam applied to the recording medium.

On the other hand, for high-density recording of information in a recording medium through the use of holography, positioning of the information light and the reference light with respect to the recording medium is important. In the conventional optical information recording/reproducing methods that use holography, however, there are many cases in which the recording medium itself carries no information for positioning. In such cases, positioning of the information light and the reference light with respect to the recording medium can be done only by mechanical means, and this makes it difficult to perform the positioning with high accuracy.

Published Unexamined Japanese Patent Application (KOKAI) Heisei 10-124872 mentioned above discloses a recording medium having positioning regions in which information for 'positioning the information light and the reference light is to be recorded. In this recording medium, however, the positioning regions are formed on a reflecting surface which is disposed on a side of the information recording layer opposite to the incidence side for the information light and the reference light. Thus, the light used for positioning passes through the information recording layer twice. In this case, the light used for positioning can be disturbed by the information recording layer, which results in a problem that the information for positioning deteriorates in reproduction accuracy.

## DISCLOSURE OF THE INVENTION

It is a first object of the invention to provide an optical information recording apparatus and method, an optical information reproducing apparatus and method, an optical information recording/reproducing apparatus and method, and an optical information recording medium to allow recording or reproduction of information through the use of holography and a simplified configuration of the optical system for recording or reproduction without causing a reduction in the amount of information.

In addition to the foregoing first object, it is a second object of the invention to provide an optical information recording apparatus and method, an optical information reproducing apparatus and method, an optical information recording/reproducing apparatus and method, and an optical information recording medium to allow an accurate positioning of light for recording or reproduction with respect to the optical information recording medium.

An optical information recording apparatus of the invention is an apparatus for recording information in an optical information recording medium having an information recording layer in which information is to be recorded through the use of holography, the apparatus comprising:

> information light generating means for generating information light carrying information to be recorded;
> recording-specific reference light generating means for generating recording-specific reference light; and
a recording optical system for applying the information light generated by the information light generating means and the recording-specific reference light generated by the recording-specific reference light generating means to the information recording layer so that information is recorded in the information recording layer in the form of an interference pattern resulting from interference between the information light and the recording-specific reference light,

wherein the recording optical system applies the information light and the recording-specific reference light coaxially to opposite sides of the information recording layer, letting the information light and the recording-specific reference light converge to become minimum in diameter at the same position.

According to the optical information recording apparatus of the invention, the information light and the recording-specific reference light are applied coaxially to opposite sides of the information recording layer, and converge to become minimum in diameter at the same position. Information is recorded in the information recording layer in the form of an interference pattern resulting from interference between the information light and the recording-specific reference light.

In the optical information recording apparatus of the invention, the optical information recording medium may have a positioning region in which information for positioning the information light and the recording-specific reference light is to be recorded, and the recording optical system may apply the information light and the recording-specific reference light, letting them converge to become minimum in diameter at a position along the thickness of the optical information recording medium where the positioning region is provided. The optical information recording apparatus may further comprise position control means for controlling the positions of the information light and the recording-specific reference light with respect to the optical information recording medium by using the information recorded in the positioning region.

In the optical information recording apparatus of the invention, the positioning region may be located on an 'incidence side for the recording-specific reference light with respect to the information recording layer.

In the optical information recording apparatus of the invention, the information light generating means may generate the information light by spatially modulating the recording-specific reference light having passed through the information recording layer based on the information to be recorded and reflecting the same.

In the optical information recording apparatus of the invention, the information light generating means may spatially modulate the intensity of light based on the information to be recorded.

In the optical information recording apparatus of the invention, the information light generating means may spatially modulate the phase of light based on the information to be recorded.

In the optical information recording apparatus of the invention, the recording-specific reference light generating means may generate the recording-specific reference light having a spatially modulated phase.

In the optical information recording apparatus of the invention, the recording-specific reference light generating means may generate the recording-specific reference light having a spatially modulated phase, and the information light generating means may spatially modulate the phase of light in accordance with a phase modulation pattern determined based on the information to be recorded and a phase modulation pattern of the recording-specific reference light.

An optical information recording method of the invention is a method for recording information in an optical information recording medium having an information recording layer in which information is to be recorded through the use of holography, the method comprising:

the step of generating information light carrying information to be recorded;
the step of generating recording-specific reference light; and
the recording step of applying the information light and the recording-specific reference light to the information recording layer so that information is recorded in the information recording layer in the form of an interference pattern resulting from interference between the information light and the recording-specific reference light, wherein
the recording step applies the information light and the recording-specific reference light coaxially to opposite sides of the information recording layer, letting the information light and the recording-specific reference light converge to become minimum in diameter at the same position.

According to the optical information recording method of the invention, the information light and the recording-specific reference light are applied coaxially to opposite sides of the information recording layer, and converge to become minimum in diameter at the same position. Information is recorded in the information recording layer in the form of an interference pattern resulting from interference between the information light and the recording-specific reference light.

An optical information reproducing apparatus of the invention is an apparatus for reproducing information through the use of holography from an optical information recording medium having an information recording layer in which information is recorded through the use of holography,
the optical information recording medium having a positioning region in which information for positioning reproduction-specific reference light is to be recorded, the positioning region being located on an incidence side for the reproduction-specific reference light with respect to the information recording layer, information being recorded in the information recording layer in the form of an interference pattern resulting from interference between information light and recording-specific reference light that are applied coaxially to opposite sides of the information recording layer, the information light and the recording-specific reference light converging to become minimum in diameter at a position along the thickness of the optical information recording medium where the positioning region is provided,
the optical information reproducing apparatus comprising:

reproduction-specific reference light generating means for generating the reproduction-specific reference light;
a reproducing optical system for applying the reproduction-specific reference light generated by the reproduction-specific reference light generating means to the information recording layer and for collecting reproduction light generated from the information recording layer upon application of the reproduction-specific reference light; and
detecting means for detecting the reproduction light collected by the reproducing optical system,
wherein the reproducing optical system applies the reproduction-specific reference light such that the reproduction-specific reference light becomes minimum in diameter at the position along the thickness of the optical information recording medium where the positioning region is provided, so that the application of the reproduction-specific reference light and the collection of the reproduction light are performed on an incidence side for the recording-specific reference light on the optical information recording medium, and that the reproduction-specific reference light and the reproduction light are arranged coaxially,
the optical information reproducing apparatus further comprising position control means for controlling the position of the reproduction-specific reference light with respect to the optical information recording medium by using the information recorded in the positioning region.

According to the optical information reproducing apparatus of the invention, the reproduction-specific reference light is applied to the optical information recording medium such that the reproduction-specific reference light becomes minimum in diameter at a position along the thickness of the optical information recording medium where the positioning region is provided. The application of the reproduction-specific reference light and the collection of reproduction light are performed on the incidence side for the recording-specific reference light on the optical information recording medium. The reproduction-specific reference light and the reproduction light are arranged coaxially. The position of the reproduction-specific reference light with respect to the optical information recording medium is controlled by using the information recorded in the positioning region.

In the optical information reproducing apparatus of the invention, the reproduction light may be light which is spatially modulated in intensity.

In the optical information reproducing apparatus of the invention, the reproduction light may be light which is spatially modulated in phase; the reproducing optical system may generate composite light by superimposing the reproduction light on the reproduction-specific reference light; and the detecting means may detect the composite light.

In the optical information reproducing apparatus of the invention, the reproduction-specific reference light generating means may generate the reproduction-specific reference light having a spatially modulated phase.

An optical information reproducing method of the invention is a method for reproducing information through the use of holography from an optical information recording medium having an information recording layer in which information is recorded through the use of holography,

the optical information recording medium having a positioning region in which information for positioning reproduction-specific reference light is to be recorded, the positioning region being located on an incidence side for the reproduction-specific reference light with respect to the information recording layer, information being recorded in the information recording layer in the form of an interference pattern resulting from interference between information light and recording-specific reference light that are applied coaxially to opposite sides of the information recording layer, the information light and the recording-specific reference light converging to become minimum in diameter at a position along the thickness of the optical information recording medium where the positioning region is provided,

the optical information reproducing method comprising:

the step of generating the reproduction-specific reference light;

the reproducing step of applying the reproduction-specific reference light to the information recording layer and collecting reproduction light generated from the information recording layer upon application of the reproduction-specific reference light; and the step of detecting the reproduction light collected by the reproducing optical system,

wherein the reproducing step applies the reproduction-specific reference light such that the reproduction-specific reference light becomes minimum in diameter at the position along the thickness of the optical information recording medium where the positioning region is provided, so that the application of the reproduction-specific reference light and the collection of the reproduction light are performed on an incidence side for the recording-specific reference light on the optical information recording medium, and that the reproduction-specific reference light and the reproduction light are arranged coaxially,

the optical information reproducing method further comprising the step of controlling the position of the reproduction-specific reference light with respect to the optical information recording medium by using the information recorded in the positioning region.

According to the optical information reproducing method of the invention, the reproduction-specific reference light is applied to the optical information recording medium such that the reproduction-specific reference light becomes minimum in diameter at a position along the thickness of the optical information recording medium where the positioning region is provided. The application of the reproduction-specific reference light and the collection of reproduction light are performed on the incidence side for the recording-specific reference light on the optical information recording medium. The reproduction-specific reference light and the reproduction light are arranged coaxially. The position of the reproduction-specific reference light with respect to the optical information recording medium is controlled by using the information recorded in the positioning region.

An optical information recording/reproducing apparatus of the invention is an apparatus for recording information in an optical information recording medium having an information recording layer in which information is to be recorded through the use of holography and for reproducing information from the optical information recording medium, the apparatus comprising:

information light generating means for generating information light carrying information to be recorded;

recording-specific reference light generating means for generating recording-specific reference light;

reproduction-specific reference light generating means for generating reproduction-specific reference light;

a recording/reproducing optical system for, when recording information, applying the information light generated by the information light generating means and the recording-specific reference light generated by the recording-specific reference light generating means to the information recording layer so that information is recorded in the information recording layer in the form of an interference pattern resulting from interference between the information light and the recording-specific reference light and, when reproducing information, applying the reproduction-specific reference light generated by the reproduction-specific reference light generating means to the information recording layer and collecting reproduction light generated from the information recording layer upon application of the reproduction-specific reference light; and
detecting means for detecting the reproduction light collected by the recording/reproducing optical system,

wherein the recording/reproducing optical system applies, when recording information, the information light and the recording-specific reference light coaxially to opposite sides of the information recording layer, letting the information light and the recording-specific reference light converge to become minimum in diameter at the same position, and, when reproducing information, applies the reproduction-specific reference light such that the reproduction-specific reference light becomes minimum in diameter at the position along the thickness of the optical information recording medium where the recording-specific reference light becomes minimum in diameter, so that the application of the reproduction-specific reference light and the collection of the reproduction light are performed on an incidence side for the recording-specific reference light on the optical information recording medium, and that the reproduction-specific reference light and the reproduction light are arranged coaxially.

According to the optical information recording/reproducing apparatus of the invention, when recording information, the information light and the recording-specific reference light are applied coaxially to opposite sides of the information recording layer, and converge to become minimum in diameter at the same position. Information is recorded in the information recording layer in the form of an interference pattern resulting from interference between the information light and the recording-specific reference light. When reproducing information, the reproduction-specific reference light is applied to the optical information recording medium such that the reproduction-specific reference light becomes minimum in diameter at the position along the thickness of the optical information recording medium where the recording-specific reference light becomes minimum in diameter. The application of the reproduction-specific reference light and the collection of reproduction light are performed on the incidence side for the recording-specific reference light on the optical information recording medium. The reproduction-specific reference light and the reproduction light are arranged coaxially.

In the optical information recording/reproducing apparatus of the invention, the optical information recording medium may have a positioning region in which information for positioning the information light, the recording-specific reference light, and the reproduction-specific reference light is to be recorded; and the recording/reproducing optical system may apply the information light, the recording-specific reference light, and the reproduction-specific reference light, letting them converge to become minimum in diameter at a position along the thickness of the optical information recording medium where the positioning region is provided. The optical information recording/reproducing apparatus may further comprise position control means for controlling, when recording information, the positions of the information light and the recording-specific reference light with respect to the optical information recording medium by using the information recorded in the positioning region, and, when reproducing information, the position of the reproduction-specific reference light with respect to the optical information recording medium by using the information recorded in the positioning region.

In the optical information recording/reproducing apparatus of the invention, the positioning region may be located on the incidence side for the recording-specific reference light and the reproduction-specific reference light with respect to the information recording layer.

In the optical information recording/reproducing apparatus of the invention, the information light generating means may generate the information light by spatially modulating the recording-specific reference light having passed through the information recording layer based on the information to be recorded and reflecting the same.

In the optical information recording/reproducing apparatus of the invention, the information light generating means may spatially modulate the intensity of light based on the information to be recorded.

In the optical information recording/reproducing apparatus of the invention, the information light generating means may spatially modulate the phase of light based on the information to be recorded; the recording/reproducing optical system may generate composite light by superimposing the reproduction light on the reproduction-specific reference light; and the detecting means may detect the composite light.

In the optical information recording/reproducing apparatus of the invention, the recording-specific reference light generating means may generate the recording-specific reference light having a spatially modulated phase, and the reproduction-specific reference light generating means may generate the reproduction-specific reference light having a spatially modulated phase.

In the optical information recording/reproducing apparatus of the invention, the recording-specific reference light generating means may generate the recording-specific reference light having a spatially modulated phase; the information light generating means may spatially modulate the phase of light in accordance with a phase modulation pattern determined based on the information to be recorded and a phase modulation pattern of the recording-specific reference light; the reproduction-specific reference light generating means may generate the reproduction-specific reference light having a spatially modulated phase; the recording/reproducing optical system may generate composite light by superimposing the reproduction light on the reproduction-specific reference light; and the detecting means may detect the composite light.

An the optical information recording/reproducing method of the invention is a method for recording information in an optical information recording medium having an information recording layer in which information is to be recorded through the use of holography and for reproducing information from the optical information recording medium, the method comprising:

the step of generating information light carrying information to be recorded;
the step of generating recording-specific reference light;
the recording step of applying the information light generated by the information light generating means and the recording-specific reference light generated by the recording-specific reference light generating means to the information recording layer so that information is recorded in the information recording layer in the form of an interference pattern resulting from interference between the information light and the recording-specific reference light;
the step of generating reproduction-specific reference light;
the reproducing step of applying the reproduction-specific reference light to the information recording layer and collecting reproduction light generated from the information recording layer upon application of the reproduction-specific reference light; and
the step of detecting the reproduction light, wherein:

the recording step applies the information light and the recording-specific reference light coaxially to opposite sides of the information recording layer, letting the information light and the recording-specific reference light converge to become minimum in diameter at the same position; and
the reproducing step applies the reproduction-specific reference light such that the reproduction-specific reference light becomes minimum in diameter at the position along the thickness of the optical information recording medium where the recording-specific reference light becomes minimum in diameter, so that the application of the reproduction-specific reference light and the collection of the reproduction light are performed on an incidence side for the recording-specific reference light on the optical information recording medium, and that the reproduction-specific reference light and the reproduction light are arranged coaxially.

According to the optical information recording/reproducing method of the invention, when recording information, the information light and the recording-specific reference light are applied coaxially to opposite sides of the information recording layer, and converge to become minimum in diameter at the same position. Information is recorded in the information recording layer in the form of an interference pattern resulting from interference between the information light and the recording-specific reference light. When reproducing information, the reproduction-specific reference light is applied to the optical information recording medium such that the reproduction-specific reference light becomes minimum in diameter at the position along the thickness of the optical information recording medium where the recording-specific reference light becomes minimum in diameter. The application of the reproduction-specific reference light and the collection of reproduction light are performed on the incidence side for the recording-specific reference light on the optical information recording medium. The reproduction-specific reference light and the reproduction light are arranged coaxially.

An optical information recording medium of the invention comprises:

an information recording layer in which information is to be recorded through the use of holography;
a first surface on which recording-specific reference light and reproduction-specific reference light are incident and from which reproduction light exits;
a second surface on which information light carrying information to be recorded is incident; and
a positioning region in which information for positioning the recording-specific reference light, the information light, and the reproduction-specific reference light is to be recorded, the positioning region being located on the first-surface side with respect to the information recording layer.

According to the optical information recording medium of the invention, when recording information, the information light and the recording-specific reference light can be applied coaxially to opposite sides of the information recording layer while letting the information light and the recording-specific reference light converge to become minimum at a position along the thickness of the optical information recording medium where the positioning region is provided. This makes it possible to record information in the information recording layer in the form of an interference pattern resulting from interference between the information light and the recording-specific reference light. Moreover, when recording information, it is possible to control the positions of the information light and the recording-specific reference light with respect to the optical information recording medium by using the information recorded in the positioning region. When reproducing information, the reproduction-specific reference light can be applied to the optical information recording medium such that the reproduction-specific reference light becomes minimum in diameter at the position along the thickness of the optical information recording medium where the positioning region is provided. This makes it possible to perform the application of the reproduction-specific reference light and the collection of reproduction light on an incidence side for the recording-specific reference light on the optical information recording medium, and to arrange the reproduction-specific reference light and the reproduction light coaxially. Moreover, when reproducing information, it is possible to control the position of the reproduction-specific reference light with respect to the optical information recording medium by using the information recorded in the positioning region.

Other objects, features and advantages of the invention will become sufficiently clear from the following description.

**BRIEF DESCRIPTION OF THE DRAWINGS**

FIG. 1 is an explanatory diagram showing essential parts of a recording/reproducing optical system of an optical information recording/reproducing apparatus according to a first embodiment of the invention.

FIG. 2 is an explanatory diagram showing another example of an optical information recording medium according to the first embodiment of the invention.

FIG. 3 is an explanatory diagram showing a general configuration of the recording/reproducing optical system of the optical information recording/reproducing apparatus according to the first embodiment of the invention.

FIG. 4 is a block diagram showing a configuration of the optical information recording/reproducing apparatus according to the first embodiment of the invention.

FIG. 5 is an explanatory diagram showing a state of the essential parts of the recording/reproducing optical system during a servo operation in the first embodiment of the invention.

FIG. 6 is an explanatory diagram showing a state of the essential parts of the recording/reproducing optical system during a recording operation in the first embodiment of the invention.

FIG. 7 is an explanatory diagram showing a state of the essential parts of the recording/reproducing optical system during a reproducing operation in the first embodiment of the invention.

FIG. 8 is an explanatory diagram for explaining an example of a method for producing focus error information in the first embodiment of the invention.

FIG. 9 is an explanatory diagram for explaining an example of a method for producing tracking error information and a method for tracking servo in the first embodiment of the invention.

FIG. 10 is an explanatory diagram for explaining an example of the method for producing tracking error information and the method for tracking servo in the first embodiment of the invention.

FIG. 11 is a cross-sectional view showing essential parts of a phase spatial light modulator in the first embodiment of the invention.

FIG. 12 is an explanatory diagram showing the phase spatial light modulator and its peripheral circuits in the first embodiment of the invention.

FIG. 13 is a plan view of a thin-film coil in the phase spatial light modulator shown in FIG. 11.

FIG. 14 is an explanatory diagram showing a structure of a one-dimensional magnetic photonic crystal.

FIG. 15 is an explanatory diagram for explaining the operation of the phase spatial light modulator shown in FIG. 11.

FIG. 16 is a cross-sectional view showing another example of configuration of the phase spatial light modulator in the first embodiment of the invention.

FIG. 17 is an explanatory diagram for explaining the operation of the phase spatial light modulator shown in FIG. 16.

FIG. 18 is an explanatory diagram for explaining the operation of the phase spatial light modulator shown in FIG. 16.

FIG. 19 is an explanatory diagram showing a general configuration of a recording/reproducing optical system of an optical information recording/reproducing apparatus according to a second embodiment of the invention.

FIG. 20 is an explanatory diagram showing a state of essential parts of the recording/reproducing optical system during a recording operation using recording-specific reference light whose phase is not spatially modulated in the second embodiment of the invention.

FIG. 21 is an explanatory diagram showing a state of the essential parts of the recording/reproducing optical system during a reproducing operation using reproduction-specific reference light whose phase is not spatially modulated in the second embodiment of the invention.

FIG. 22A through FIG. 22E are waveform diagrams for explaining in detail the principle of reproduction of information using the reproduction-specific reference light whose phase is not spatially modulated in the optical information recording/reproducing apparatus according to the second embodiment of the invention.

FIG. 23 is an explanatory diagram showing a state of the essential parts of the recording/reproducing optical system during a recording operation using recording-specific reference light whose phase is spatially modulated in the second embodiment of the invention.

FIG. 24 is an explanatory diagram showing a state of the essential parts of the recording/reproducing optical system during a reproducing operation using reproduction-specific reference light whose phase is spatially modulated in the second embodiment of the invention.

FIG. 25A through FIG. 25E are waveform diagrams for explaining in detail the principle of reproduction of information using the reproduction-specific reference light whose phase is spatially modulated in the optical information recording/reproducing apparatus according to the second embodiment of the invention.

FIG. 26 is an explanatory diagram showing a recording/reproducing optical system of an optical information recording/reproducing apparatus according to a third embodiment of the invention.

FIG. 27 is a perspective view showing an optical head of the optical information recording/reproducing apparatus according to the third embodiment of the invention.

FIG. 28 is a plan view showing the appearance of the optical information recording/reproducing apparatus according to the third embodiment of the invention.

FIG. 29 is an explanatory diagram showing a modified example of the recording/reproducing optical system of the third embodiment of the invention.

## BEST MODE FOR CARRYING OUT THE INVENTION

Hereinafter, embodiments of the invention will be described in detail with reference to the drawings.

[First Embodiment]

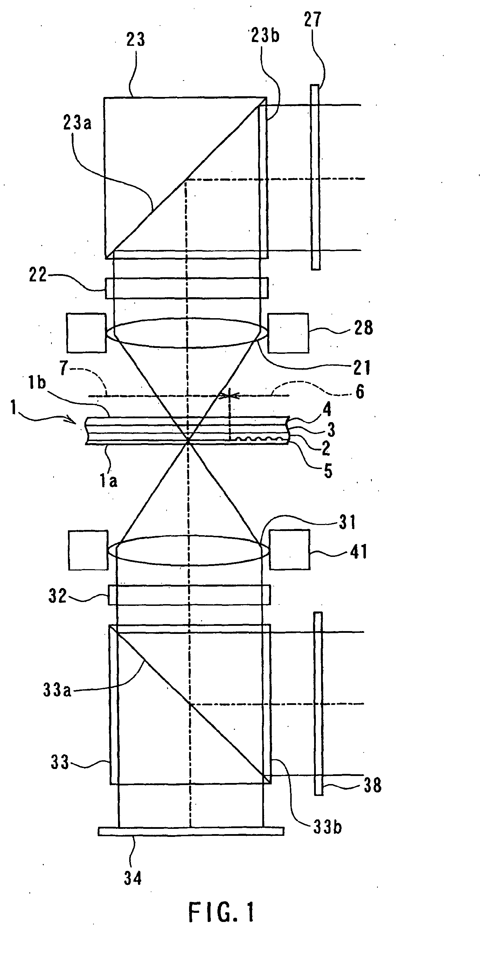

FIG. 1 is an explanatory diagram showing essential parts of a recording/reproducing optical system of an optical information recording/reproducing apparatus according to a first embodiment of the invention. The optical information recording/reproducing apparatus according to the embodiment includes an optical information recording apparatus and an optical information reproducing apparatus according to the embodiment. The recording/reproducing optical system in the embodiment includes a recording optical system of the optical information recording apparatus and a reproducing optical system of the optical information reproducing apparatus.

Reference is now made to FIG. 1 to describe the configuration of an optical information recording medium according to the embodiment. The optical information recording medium 1 according to the embodiment comprises two disk-like transparent substrates 2 and 4 made of polycarbonate or the like, an information recording layer 3 provided between the transparent substrates 2 and 4, and a protective layer 5 provided to be adjacent to a surface of the transparent substrate 2 opposite to the information recording layer 3.

The information recording layer 3 is a layer in which information is to be recorded through the use of holography, and is made of a hologram material which varies, when irradiated with light, in its optical characteristics such as refractive index, permittivity, and reflectance, depending on the intensity of the light. For example, hologram materials such as photopolymer HRF-600 (product name) manufactured by Dupont and photopolymer ULSH-500 (product name) manufactured by Aprils may be used.

In this optical information recording medium 1, the surface of the protective layer 5 opposite to the transparent substrate 2 (the lower surface in FIG. 1) acts as a first surface 1a on which recording-specific reference light and reproduction-specific reference light are incident and from which reproduction light exits. The surface of the transparent substrate 4 opposite to the information recording layer 3 (the upper surface in FIG. 1) acts as a second surface 1b on which information light carrying information to be recorded is incident.

A plurality of address servo areas 6 extending linearly in radial directions are provided at predetermined angular intervals on the interface between the transparent substrate 2 and the protective layer 5. In the information recording layer 3, sections in the form of sectors between adjacent ones of the address servo areas 6 serve as data areas 7. On the address servo areas 6, information for performing focus servo and tracking servo under a sampled servo system and address information are recorded in advance in the form of emboss pits or the like. The focus servo can also be performed by using the interface between the transparent substrate 2 and the protective layer 5.

As described above, the address servo areas 6 are located on the first-surface-1a side with respect to the information recording layer 3. Information for positioning the recording-specific reference light, the information light, and the reproduction-specific reference light is recorded therein. The address servo areas 6 correspond to the positioning region of the invention.

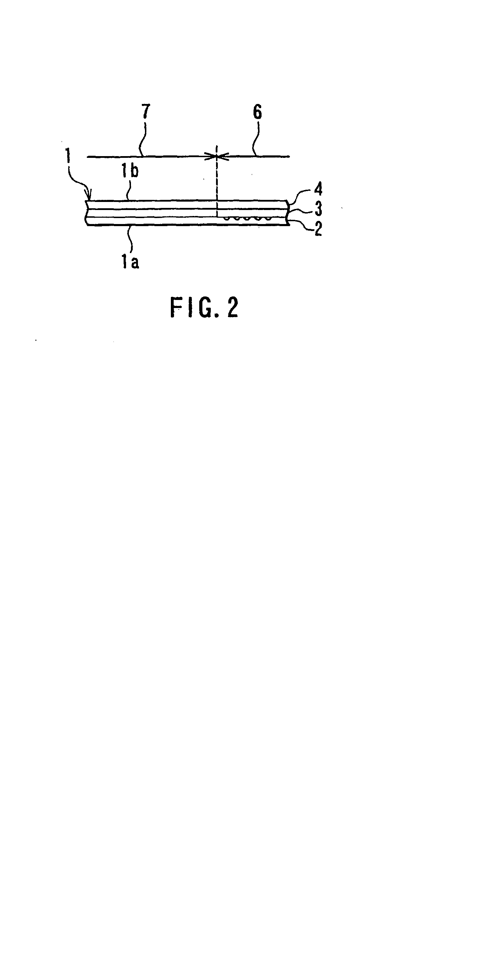

As shown in FIG. 2, in the optical information recording medium 1, the address servo areas 6 may be provided on the interface between the transparent substrate 2 and the information recording layer 3. In this case, the protective layer 5 is unnecessary.

Now, essential parts of the recording/reproducing optical system of the optical information recording/reproducing apparatus according to the embodiment will be described with reference to FIG. 1. The recording/reproducing optical system has an objective lens 21 that faces toward the transparent substrate 4 of the optical information recording medium 1, and a quarter-wave plate 22 and a polarization beam splitter 23 that are arranged in this order from the objective lens 21, on a side of the objective lens 21 opposite from the optical information recording medium 1. The polarization beam splitter 23 has a polarization beam splitter surface 23a for reflecting S-polarized light and transmitting P-polarized light. S-polarized light refers to linear polarized light whose direction of polarization is perpendicular to the incidence plane (plane of the drawing sheet of FIG. 1). P-polarized light refers to linear polarized light whose direction of polarization is parallel to the incidence plane. The polarization beam splitter surface 23a forms 45° with the surface of the optical information recording medium 1. In the polarization beam splitter 23, the surface on the right side in FIG. 1 serves as an information light incidence surface 23b. The recording/reproducing optical system further has a spatial light modulator 27 which is disposed on the optical path of light incident on the information light incidence surface 23b of the polarization beam splitter 23. The spatial light modulator 27 has a number of pixels arranged in a matrix, and is capable of generating information light that carries information by spatially modulating the intensity of outgoing light, by selecting, for example, a light-transmitting state or a light-blocking state for each of the pixels. For example, a liquid crystal element may be used as the spatial light modulator 27.

The recording/reproducing optical system further has an objective lens 31 that faces toward the protective layer 5 of the optical information recording medium 1, and a quarter-wave plate 32, a polarization beam splitter 33, and a photodetector 34 that are arranged in this order from the objective lens 31, on a side of the objective lens 31 opposite from the optical information recording medium 1. The polarization beam splitter 33 has a polarization beam splitter surface 33a for reflecting S-polarized light and transmitting P-polarized light. The polarization beam splitter surface 33a forms 45° with the surface of the optical information recording medium 1. In the polarization beam splitter 33, the surface on the right side in FIG. 1 serves as a reference light incidence surface 33b. The recording/reproducing optical system further has a phase spatial light modulator 38 which is disposed on the optical path of light incident on the reference light incidence surface 33b of the polarization beam splitter 33. The phase spatial light modulator 38 has a number of pixels arranged in a matrix, and is capable of spatially modulating the phase of light by selecting the phase of outgoing light from between two values or from among three or more values for each of the pixels.

The photodetector 34 has a number of pixels arranged in a matrix, and is capable of detecting the intensity of light received by each pixel. A CCD type solid state image pick-up element or a MOS type solid state image pick-up element may be used as the photodetector 34. A smart optical sensor in which a MOS type solid state image pick-up element and a signal processing circuit are integrated on a single chip (see the literature "O plus E, September, 1996, No. 202". pp. 93-99 by way of example) may also be used as the photodetector 34. Since this smart optical sensor has a high transfer rate and a high speed operating function, the use of this smart optical sensor allows high speed reproduction, e. g., reproduction at a transfer rate on the order of Gbit/sec.

The recording/reproducing optical system further has an actuator 28 capable of moving the objective lens 21 in the direction of the thickness of the optical information recording medium 1 and the direction of tracks thereof, and an actuator 41 capable of moving the objective lens 31 in the direction of the thickness of the optical information recording medium 1 and the direction of tracks thereof.

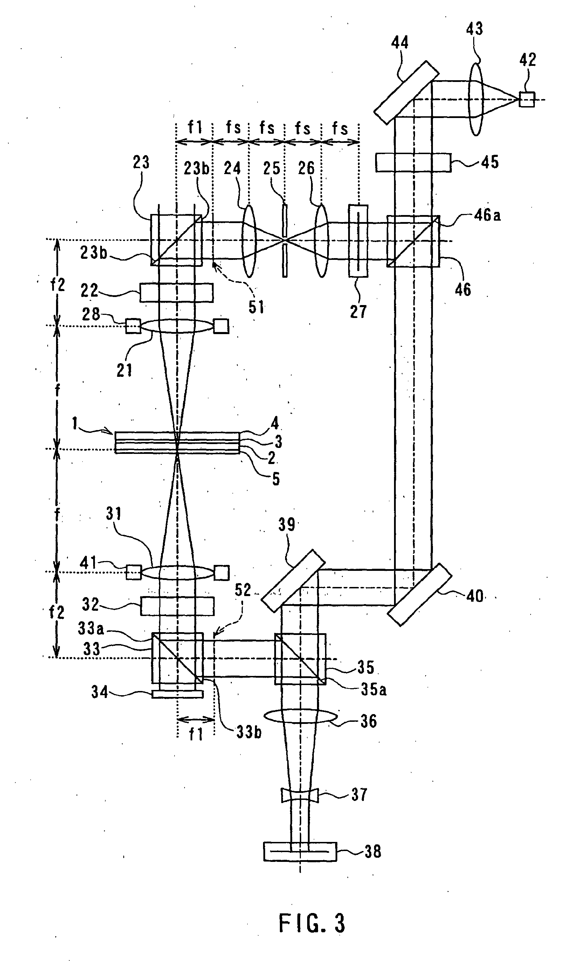

A general configuration of the recording/reproducing optical system of the optical information recording/reproducing apparatus according to the embodiment will now be described with reference to FIG. 3.

Initially, description will be given of the parts of the recording/reproducing optical system related to information light. The recording/reproducing optical system has the objective lens 21, the quarter-wave plate 22, the polarization beam splitter 23, and the actuator 28 described above. The recording/reproducing optical system further has a convex lens 24, a pin hole 25, a convex lens 26, and the spatial light modulator 27 that are arranged in this order from the polarization beam splitter 23 on the optical path of light incident on the information light incidence surface 23b of the polarization beam splitter 23.

The convex lens 24 and the convex lens 26 have the same focal length. The focal length shall be indicated by fs. The center of the convex lens 24, the pin hole 25, the center of the convex lens 26, and the image forming plane of the spatial light modulator 27 are arranged at pitches of the focal length fs. Thus, parallel beams having passed through the spatial light modulator 27 are collected by the convex lens 26 to be minimum in diameter at the position of the pin hole 25, and pass through this pin hole 25. The light having passed through the pin hole 25 becomes diverging light, and is incident on the convex lens 24. It then becomes parallel beams to be incident on the information light incidence surface 23b of the polarization beam splitter 23. An image plane 51 conjugate to the image forming plane of the spatial light modulator 27 is formed between the convex lens 24 and the polarization beam splitter 23 at a distance of the focal length fs from the center of the convex lens 24.

Where f1 represents a distance between the center of the polarization beam splitter 23 and the image plane 51, f2 represents a distance between the center of the polarization beam splitter 23 and the center of the objective lens 21, and f represents the focal length of the objective lens 21, there holds f = f1 + f2. The interface between the transparent substrate 2 and the protective layer 5 of the optical information recording medium 1 is located at a distance of the focal length f from the center of the objective lens 21. With such a configuration, it is possible to locate the spatial light modulator 27 at a distance from the objective lens 21, which allows greater design flexibility in the optical system.

Now, description will be given of the parts of the recording/reproducing optical system related to recording-specific reference light, reproduction-specific reference light, and reproduction light. The recording/reproducing optical system has the objective lens 31, the quarter-wave plate 32, the polarization beam splitter 33, the photodetector 34, and the actuator 41 described previously. The recording/reproducing optical system further has a polarization beam splitter 35 which is disposed on the optical path of light incident on the reference light incidence surface 33b of the polarization beam splitter 33. The polarization beam splitter 35 has a polarization beam splitter surface 35a for reflecting S-polarized light and transmitting P-polarized light. The polarization beam splitter surface 35a lies in parallel with the polarization beam splitter surface 33a of the polarization beam splitter 33.

The recording/reproducing optical system further has a convex lens 36, a concave lens 37, and the phase spatial light modulator 38 that are arranged in this order from the polarization beam splitter 35, below the polarization beam splitter 35 in FIG. 3. The phase spatial light modulator 38 is of reflection type. An image plane 52 conjugate to the image forming plane of the phase spatial light modulator 38 is formed between the polarization beam splitter 35 and the polarization beam splitter 33.

The distance between the center of the polarization beam splitter 33 and the image plane 52 is f1, the same as the distance between the center of the polarization beam splitter 23 and the image plane 51. The distance between the center of the polarization beam splitter 33 and the center of the objective lens 31 is f2, the same as the distance between the center of the polarization beam splitter 23 and the center of the objective lens 21. The focal length of the objective lens 31 is f, the same as the focal length of the objective lens 21. The interface between the transparent substrate 2 and the protective layer 5 of the optical information recording medium 1 is located at a distance of the focal length f from the center of the objective lens 31. With such a configuration, it is possible to locate the phase spatial light modulator 38 at a distance from the objective lens 31, which allows greater design flexibility in the optical system.

Above the polarization beam splatter 35 in FIG. 3, the recording/reproducing optical system further has a mirror 39 disposed to form 90° with respect to the polarization beam splitter surface 35a, and a mirror 40 disposed in parallel with the mirror 39.

Now, description will be given of the parts of the recording/reproducing optical system common to the information light, the recording-specific reference light, and the reproduction-specific reference light. The recording/reproducing optical system has a light source device 42 that emits coherent linearly polarized laser light, and a collimator lens 43, a mirror 44, a rotation-causing optical element 45, and a polarization beam splitter 46 that are arranged in this order from the light source device 42 on the optical path of the light emitted from the light source device 42. For example, a half-wave plate or an optical rotation plate is used as the rotation-causing optical element 45. The polarization beam splitter 46 has a polarization beam splitter surface 46a for reflecting S-polarized light and transmitting P-polarized light.

For plain representation of the essential parts of the recording/reproducing optical system shown in FIG. 3, FIG. 1 shows the spatial light modulator 27 as being located at the position of the image plane 51 and the phase spatial light modulator 38 as being transmission type and located at the position of the image plane 52.

Description will now be given of the outline of operation of the recording/reproducing optical system shown in FIG. 3. The light source device 42 emits S-polarized linear light or P-polarized linear light. The collimator lens 43 collimates the light emitted by the light source device 42 into parallel beams for exit therefrom. The rotation-causing optical element 45 optically rotates the light that has exited the collimator lens 43 and has been reflected by the mirror 44, to emit light including S-polarized components and P-polarized components.

The S-polarized components of the light having exited the rotation-causing optical element 45 are reflected by the polarization beam splitter surface 46a of the polarization beam splitter 46 to be incident on the spatial light modulator 27. The spatial light modulator 27 spatially modulates the intensity of the light to generate information light. The information light having exited the spatial light modulator 27 passes through the convex lens 26, the pin hole 25, and the convex lens 24 in succession, and is reflected by the polarization beam splitter surface 23a of the polarization beam splitter 23 to be incident on the quarter-wave plate 22. The information light having passed through the quarter-wave plate 22 becomes circularly polarized light, is collected by the objective lens 21, and is applied to the optical information recording medium 1 while converging to become minimum in diameter on the interface between the transparent substrate 2 and the protective layer 5. The optical system consisting of the convex lens 26, the pin hole 25, and the convex lens 24 may exercise spatial filtering.

On the other hand, the P-polarized components of the light having exited the rotation-causing optical element 45 are transmitted through the polarization beam splitter surface 46a of the polarization beam splitter 46, reflected by the mirrors 40 and 39, transmitted through the polarization beam splitter surface 35a of the polarization beam splitter 35, pass through the convex lens 36 and the concave lens 37, and impinge on the phase spatial light modulator 38 as parallel beams. For example, the phase spatial light modulator 38 sets the phase of outgoing light to either of two values differing by π (rad) from each other for each pixel, thereby spatially modulating the phase of the light. The light modulated by the phase spatial light modulator 38 serves as recording-specific reference light or reproduction-specific reference light. Furthermore, the phase spatial light modulator 38 rotates the direction of polarization of outgoing light by 90° with respect to the direction of polarization of incident light. The light that exits the phase-spatial light modulator 38 thus becomes S-polarized light. The light having exited the phase-spatial light modulator 38 passes through the concave lens 37 and the convex lens 36, is reflected by the polarization beam splitter surface 35a of the polarization beam splitter 35, and is further reflected by the polarization beam splitter surface 33a of the polarization beam splitter 33 to be incident on the quarter-wave plate 32. The light having passed through the quarter-wave plate 32 becomes circularly polarized light, is collected by the objective lens 31, and is applied to the optical information recording medium 1 while converging to become minimum in diameter on the interface between the transparent substrate 2 and the protective layer 5.

Return light that results when the light applied to the optical information recording medium 1 by the objective lens 31 is reflected off the interface between the transparent substrate 2 and the protective layer 5, or reproduction light that occurs from the information recording layer 3 according to the reproduction-specific reference light applied to the optical information recording medium 1 by the objective lens 31 is collimated through the objective lens 31, passes through the quarter-wave plate 32 to become P-polarized light, and passes through the polarization beam splitter surface 33a of the polarization beam splitter 33 to be incident on the photodetector 34.

When the optical information recording medium 1 is configured as shown in FIG.. 2, the light from the objective lens 21 and the light from the objective lens 31 are both applied to the optical information recording medium 1 while converging to become minimum in diameter on the interface between the transparent substrate 2 and the information layer 3, i.e., the position where the address servo areas 6 are provided.

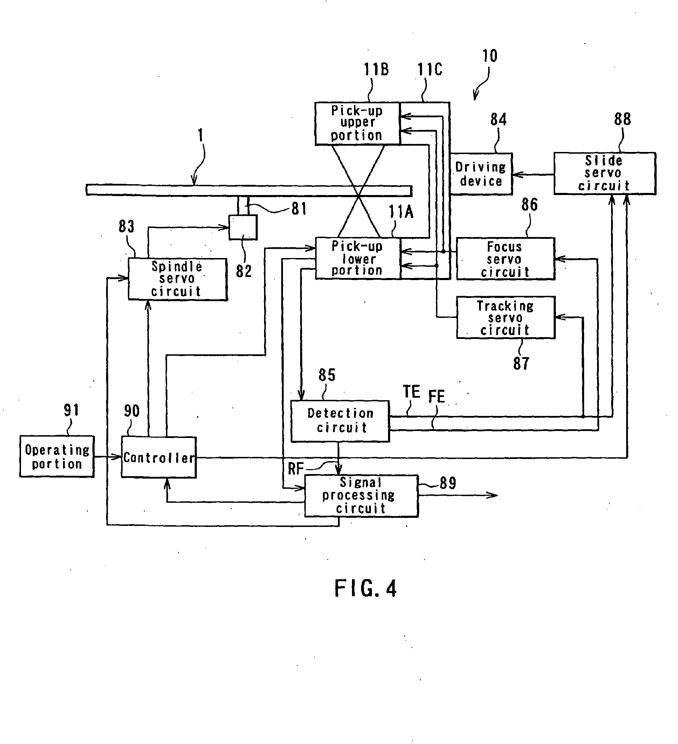

Now, the configuration of the optical information recording/reproducing apparatus according to the present embodiment will be described with reference to FIG. 4. The optical information recording/reproducing apparatus 10 has: a spindle 81 on which the optical information recording medium 1 is mounted; a spindle motor 82 for rotating the spindle 81; and a spindle servo circuit 83 for controlling the spindle motor 82 to keep the rotation speed of the optical information recording medium 1 at a predetermined value. The optical information recording/reproducing apparatus 10 further has: a pick-up lower portion 11A located under the optical information recording medium 1, for applying recording-specific reference light or reproduction-specific reference light to the optical information recording medium 1 and collecting reproduction light; a pick-up upper portion 11B located above the optical information recording medium 1, for applying information light to the optical information recording medium 1; a coupling portion 11C for coupling the pick-up lower portion 11A and the pick-up upper portion 11B to each other; and a driving device 84 for driving the coupling portion 11C to make the pick-up lower portion 11A and the pick-up upper portion 11B movable in a direction of the radius of the optical information recording medium 1. The pick-up lower portion 11A and the pick-up upper portion 11B are opposed to each other with the optical information recording medium 1 in between.

Among the components of the recording/reproducing optical system shown in FIG. 3, the pick-up lower portion 11A contains the objective lens 31, the quarter-wave plate 32, the polarization beam splitter 33, the photodetector 34, the polarization beam splitter 35, the convex lens 36, the concave lens 37, the phase spatial light modulator 38, the mirrors 39 and 40, and the actuator 41. The pick-up upper portion 11B contains the rest of the components of the recording/reproducing optical system shown in FIG. 3. The optical path between the polarization beam splitter 46 and the mirror 40 is formed inside the coupling portion 11C.

The optical information recording/reproducing apparatus 10 further has: a detection circuit 85 for detecting a focus error signal FE, a tracking error signal TE and a reproduction signal RF from a signal outputted from the pick-up lower portion 11A; a focus servo circuit 86; a tracking servo circuit 87; and a slide servo circuit 88.

Based on the focus error signal FE detected by the detection circuit 85, the focus servo circuit 86 drives the actuator 41 in the pick-up lower portion 11A to move the objective lens 31 in a direction of the thickness of the optical information recording medium 1, and also drives the actuator 28 in the pick-up upper portion 11B to move the objective lens 21 in a direction of the thickness of the optical information recording medium 1, to thereby perform focus servo. Since the distance between the pick-up lower portion 11A and the pick-up upper portion 11B is constant, focus servo on the light emitted by the pick-up upper portion 11B can be performed based on the focus error signal FE which is detected by using the light emitted by the pick-up lower portion 11A.

Based on the tracking error signal TE detected by the detection circuit 85, the tracking servo circuit 87 drives the actuator 41 in the pick-up lower portion 11A to move the objective lens 31 in a direction of the radius of the optical information recording medium 1, and also drives the actuator 28 in the pick-up upper portion 11B to move the objective lens 21 in a direction of the radius of the optical information recording medium 1, to thereby perform tracking servo.

The slide servo circuit 88 performs slide servo by controlling the driving device 84 based on the tracking error signal TE and a command from a controller to be described later to move the pick-up 11 in a direction of the radius of the optical information recording medium 1.

The optical information recording/reproducing apparatus 10 further has: a signal processing circuit 89 for reproducing data recorded in the data areas 7 of the optical information recording medium 1 by decoding data outputted by the photodetector 34 in the pick-up lower portion 11A and for reproducing a basic clock and determining addresses from the reproduction signal RF from the detection circuit 85; a controller 90 for controlling the optical information recording/reproducing apparatus 10 as a whole; and an operating portion 91 for supplying various instructions to the controller 90. The controller 90 receives input of the basic clock and address information outputted by the signal processing circuit 89 and controls the pick-up lower portion 11A, the pick-up upper portion 11B, the spindle servo circuit 83, the slide servo circuit 88 and so on. The basic clock outputted by the signal processing circuit 89 is inputted to the spindle servo circuit 83. The controller 90 has a CPU (central processing unit), a ROM (read only memory) and a RAM (random access memory), and the CPU executes programs stored in the ROM using the RAM as a work area to perform the functions of the controller 90.

The light source device 42 and the spatial light modulator 27 in the pick-up upper portion 11B and the phase spatial light modulator 38 in the pick-up lower portion 11A are controlled by the controller 90 shown in FIG. 4. The controller 90 holds information on a plurality of modulation patterns for spatially modulating the phase of light with the phase spatial light modulator 38. The operating portion 91 can select any one of the plurality of modulation patterns. Then, the controller 90 supplies the information on a modulation pattern selected by itself according to predetermined conditions or a modulation pattern selected by the operating portion 91 to the phase spatial light modulator 38. In accordance with the information on the modulation pattern supplied by the controller 90, the phase spatial light modulator 38 spatially modulates the phase of light in the corresponding modulation pattern.

Servo, information recording, and information reproducing operations of the optical information recording/reproducing apparatus according to the embodiment will now be separately described in that order. The following description also serves to describe the optical information recording method, the optical information reproducing method, and the optical information recording/reproducing method according to the embodiment.

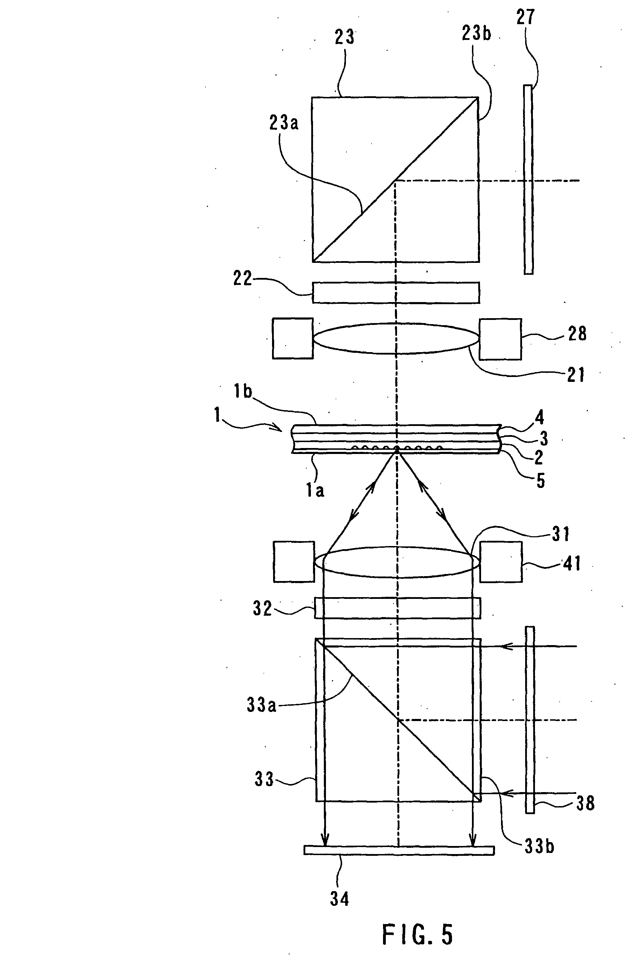

The servo operation will now be described with reference to FIG. 3 and FIG. 5. FIG. 5 is an explanatory diagram showing a state of the essential parts of the recording/reproducing optical system during the servo operation. During the servo operation, all the pixels of the spatial light modulator 27 are brought into a blocking state. The phase spatial light modulator 38 is set such that light passing through every pixel thereof has the same phase. The power of light emitted by the light source device 42 is set to a low level suitable for reproduction. The controller 90 predicts the timing at which light that has exited the objective lens 31 passes through the address servo areas 6 based on the basic clock reproduced from the reproduction signal RF, and maintains the foregoing setting while the light that has exited the objective lens 31 passes through the address servo areas 6.

The light emitted by the light source device 42 is collimated by the collimator lens 43 and passes through the mirror 44 and the rotation-causing optical element 45 to be incident on the polarization beam splitter 46. S-polarized components of the light incident on the polarization beam splitter 46 are reflected by the polarization beam splitter surface 46a and are blocked by the spatial light modulator 27.

P-polarized components of the light incident on the polarization beam splitter 46 are transmitted through the polarization beam splitter surface 46a, pass through the mirrors 40 and 39, are transmitted through the polarization beam splitter surface 35a of the polarization beam splitter 35, pass through the convex lens 36 and the concave lens 37, and are incident on the phase spatial light modulator 38. Since the phase spatial light modulator 38 rotates the direction of polarization of outgoing light by 90° with respect to the direction of polarization of incident light, the light that exits the phase spatial light modulator 38 becomes S-polarized light. The light that has exited the phase spatial light modulator 38 passes through the concave lens 37 and the convex lens 36, is reflected by the polarization beam splitter surface 35a of the polarization beam splitter 35, and is further reflected by the polarization beam splitter surface 33a of the polarization beam splitter 33 to impinge on the quarter-wave plate 32. The light having passed through the quarter-wave plate 32 becomes circularly polarized light, is collected by the objective lens 31, and is applied to the optical information recording medium 1 while converging to become minimum in diameter on the interface between the transparent substrate 2 and the protective layer 5, i.e., the position where the address servo areas 6 are provided.

Return light that is generated when the light applied to the optical information recording medium 1 by the objective lens 31 is reflected off the interface between the transparent substrate 2 and the protective layer 5 is collimated through the objective lens 31, passes through the quarter-wave plate 32 to become P-polarized light, and passes through the polarization beam splitter surface 33a of the polarization beam splitter 33 to impinge on the photodetector 34. Based on the output of the photodetector 34, the detection circuit 85 generates a focus error signal FE, a tracking error signal TE, and a reproduction signal RF. Focus servo and tracking servo are performed, the basic clock is reproduced, and addresses are determined based on these signals.

For the above-described setting for the servo operation, the configuration of the pick-up lower portion 11A is similar to that of a pick-up for recording and reproduction on a typical optical disk. Thus, the optical information recording/reproducing apparatus of the embodiment allows recording and reproduction using a typical optical disk.

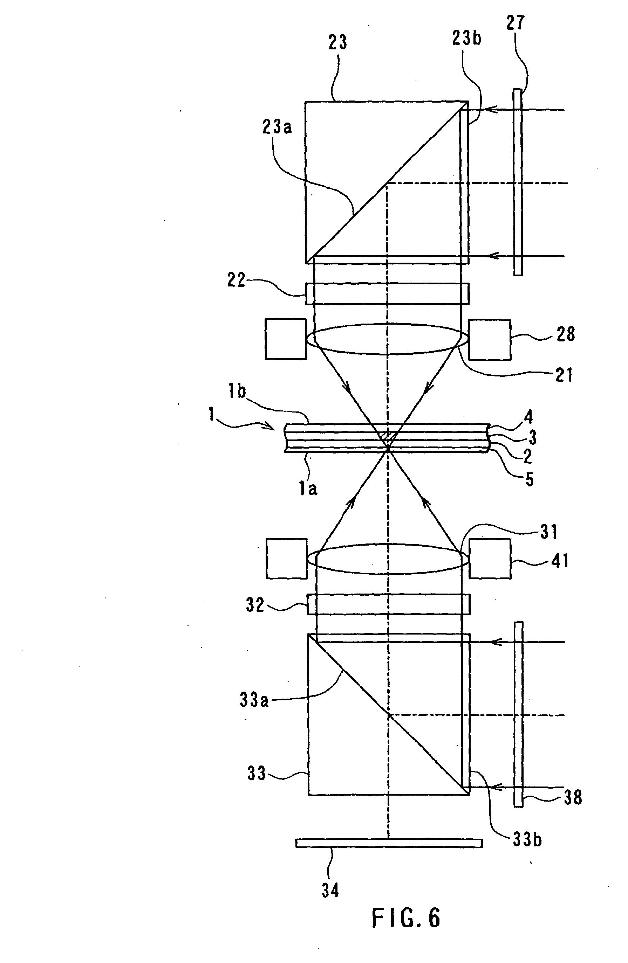

An information recording operation will now be described with reference to FIG. 3 and FIG. 6. FIG. 6 is an explanatory diagram showing a state of the essential parts of the recording/reproducing optical system during the recording operation. During the recording operation, the spatial light modulator 27 spatially modulates the intensity of light passing therethrough by selecting a transmitting state (hereinafter also referred to as ON) or a blocking state (hereinafter also referred to as OFF) pixel by pixel according to the information to be recorded, to thereby generate information light. The phase spatial light modulator 38 spatially modulates the phase of light passing therethrough by selectively giving the light a phase difference of either 0 (rad) or $\pi$ (rad) from a predetermined reference phase pixel by pixel according to a predetermined modulation pattern, to thereby generate recording-specific reference light having a spatially modulated phase.

The controller 90 supplies the information on the modulation pattern selected by itself in accordance with predetermined conditions or the modulation pattern selected by the operating portion 91 to the phase spatial light modulator 38, and the phase spatial light modulator 38 spatially modulates the phase of light passing therethrough in accordance with the information on the modulation pattern supplied by the controller 90.

The power of light emitted by the light source device 42 is set to reach high levels on a pulse basis suitable for recording. The controller 90 predicts the timing at which the light that has exited the objective lenses 21 and 31 passes through the data areas 7 based on the basic clock reproduced from the reproduction signal RF, and maintains the foregoing setting while the light that has exited the objective lenses 21 and 31 passes through the data areas 7. While the light that has exited the objective lenses 21 and 31 passes through the data areas 7, neither focus servo nor tracking servo is performed and the objective lenses 21 and 31 are fixed.

The light emitted by the light source device 42 is collimated by the collimator lens 43 and passes through the mirror 44 and the rotation-causing optical element 45 to be incident on the polarization beam splitter 46. S-polarized components of the light incident on the polarization beam splitter 46 are reflected by the polarization beam splitter surface 46a and pass through the spatial light modulator 27, at which time the light is spatially modulated in intensity in accordance with the information to be recorded, to become information light. This information light passes through the convex lens 26, the pin hole 25, and the convex lens 24 in succession, and is reflected by the polarization beam splitter surface 23a of the polarization beam splitter 23 to impinge on the quarter-wave plate 22. The information light having passed through the quarter-wave plate 22 becomes circularly polarized light, is collected by the objective lens 21, and is applied to the optical information recording medium 1 while converging to become minimum in diameter on the interface between the transparent substrate 2 and the protective layer 5. As shown in FIG. 6, the information light passes through the information recording layer 3 in the optical information recording medium 1 while converging.

P-polarized components of the light incident on the polarization beam splitter 46 are transmitted through the polarization beam splitter surface 46a, pass through the mirrors 40 and 39, are transmitted through the polarization beam splitter surface 35a of the polarization beam splitter 35, pass through the convex lens 36 and the concave lens 37, and impinge on the phase spatial light modulator 38 to become recording-specific reference light, being spatially modulated in phase. The recording-specific reference light exiting from the phase spatial light modulator 38 is S-polarized light. The light then passes through the concave lens 37 and the convex lens 36, is reflected by the polarization beam splitter surface 35a of the polarization beam splitter 35, and is further reflected by the polarization beam splitter surface 33a of the polarization beam splitter 33 to impinge on the quarter-wave plate 32. The recording-specific reference light having passed through the quarter-wave plate 32 becomes circularly polarized light, is collected by the objective lens 31, and is applied to the optical information recording medium 1 while converging to become minimum in diameter on the interface between the transparent substrate 2 and the protective layer 5. As shown in FIG. 6, the recording-specific reference light passes through the information recording layer 3 in the optical information recording medium 1 while diverging.

In this way, for recording, the information light and the recording-specific reference light are coaxially applied to opposite sides of the information recording layer 3 while converging to become minimum in diameter at the same position (on the interface between the transparent substrate 2 and the protective layer 5). The information light and the recording-specific reference light interfere with each other to form an interference pattern in the information recording layer 3. When the power of the light emitted by the light source device 42 has reached a high level for recording, the interference pattern is volumetrically recorded in the information recording layer 3 to form a reflection-type (Lippmann-type) hologram.

According to the present embodiment, a plurality of pieces of information can be recorded in an identical location of the information recording layer 3 on a multiplex basis through phase-encoding multiplexing by changing the modulation pattern of the phase of the recording-specific reference light for each piece of the information to be recorded.

In the embodiment, a method called shift multiplexing may also be used to record a plurality of pieces of data on a multiplex basis. Shift multiplexing is a method for recording a plurality of pieces of information on a multiplex basis by forming a plurality of hologram forming regions corresponding to the respective pieces of information in an optical information recording layer 3 such that the hologram forming regions are slightly shifted from each other and overlap each other in the horizontal direction.

The multiplex recording through phase-encoding multiplexing or the multiplex recording through shift multiplexing may be used alone, or both of them may be used in combination.

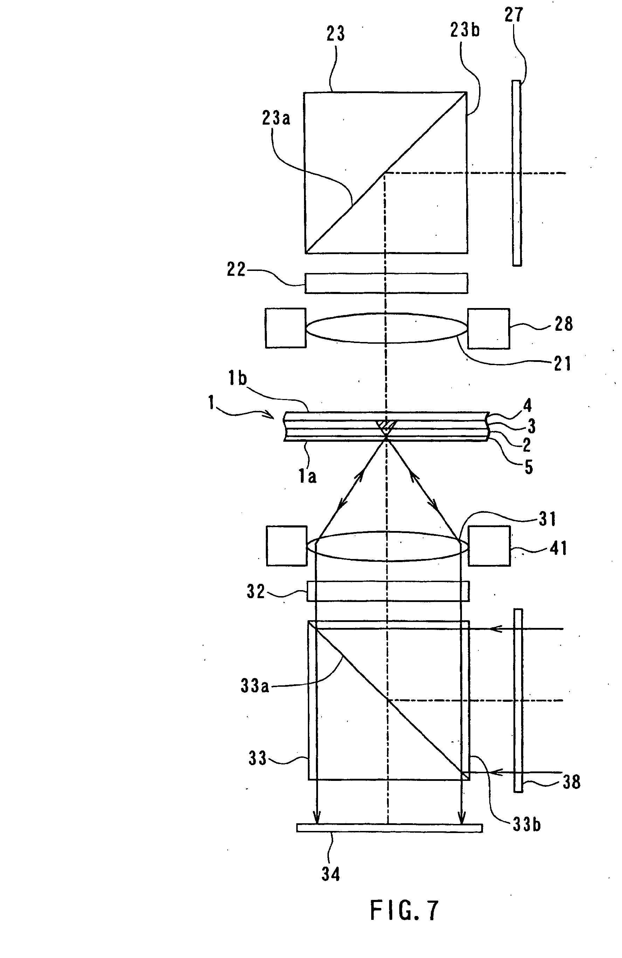

An information reproducing operation will now be described with reference to FIG. 3 and FIG. 7. FIG. 7 is an explanatory diagram showing a state of the essential parts of the recording/reproducing optical system during the reproducing operation. During the reproducing operation, all pixels of the spatial light modulator 27 are brought into a blocking state. The phase spatial light modulator 38 spatially modulates the phase of light passing therethrough by selectively giving the light a phase difference of either 0 (rad) or π (rad) from a predetermined reference phase pixel by pixel according to a predetermined modulation pattern, to thereby generate reproduction-specific reference light having a spatially modulated phase.

The controller 90 supplies the information on the modulation pattern selected by itself in accordance with predetermined conditions or the modulation pattern selected by the operating portion 91 to the phase spatial light modulator 38, and the phase spatial light modulator 38 spatially modulates the phase of light passing therethrough in accordance with the information on the modulation pattern supplied by the controller 90.

The power of the light emitted by the light source device 42 is set to a low level suitable for reproduction. The controller 90 predicts the timing at which the light that has exited the objective lenses 21 and 31 passes through the data areas 7 based on the basic clock reproduced from the reproduction signal RF, and maintains the foregoing setting while the light that has exited the objective lenses 21 and 31 passes through the data areas 7. While the light that has exited the objective lenses 21 and 31 passes through the data areas 7, neither focus servo nor tracking servo is performed and the objective lenses 21 and 31 are fixed.

The light emitted by the light source device 42 is collimated by the collimator lens 43 and passes through the mirror 44 and the rotation-causing optical element 45 to be incident on the polarization beam splitter 46. S-polarized components of the light incident on the polarization beam splatter 46 are reflected by the polarization beam splitter surface 46a and blocked by the spatial light modulator 27.

P-polarized components of the light incident on the polarization beam splitter 46 are transmitted through the polarization beam splitter surface 46a, pass through the mirrors 40 and 39, are transmitted through the polarization beam splitter surface 35a of the polarization beam splitter 35, pass through the convex lens 36 and the concave lens 37, and are incident on the phase spatial light modulator 38 to become reproduction-specific reference light, being spatially modulated in phase. The reproduction-specific reference light exiting from the phase spatial light modulator 38 is S-polarized light. The light then passes through the concave lens 37 and the convex lens 36, is reflected by the polarization beam splitter surface 35a of the polarization beam splitter 35, and is further reflected by the polarization beam splitter surface 33a of the polarization beam splitter 33 to impinge on the quarter-wave plate 32. The reproduction-specific reference light having passed through the quarter-wave plate 32 becomes circularly polarized light, is collected by the objective lens 31, and is applied to the optical information recording medium 1 while converging to become minimum in diameter on the interface between the transparent substrate 2 and the protective layer 5. As shown in FIG. 7, the reproduction-specific reference light passes through the information recording layer 3 in the optical information recording medium 1 while diverging.

Upon application of the reproduction-specific reference light, reproduction light that corresponds to the information light used for recording is generated in the information recording layer 3. The reproduction light travels toward the transparent substrate 2 while converging, becomes minimum in diameter on the interface between the transparent substrate 2 and the protective layer 5, and exits the optical information recording medium 1 while diverging. Then, the light is collimated through the objective lens 31, passes through the quarter-wave plate 32 to become P-polarized light, and passes through the polarization beam splitter surface 33a of the polarization beam splitter 33 to impinge on the photodetector 34.

On the photodetector 34 is formed an image of the ON/OFF pattern caused by the spatial light modulator 27 in the recording operation, so that information is reproduced by detecting this pattern. When a plurality of pieces of information are recorded in the information recording layer 3 on a multiplex basis by changing modulation patterns of the recording-specific reference light, among the plurality of pieces of information, the one corresponding to the modulation pattern of the reproduction-specific reference light is only reproduced.

In this way, for reproduction, the reproduction-specific reference light is applied to the optical information recording medium 1 to converge to become minimum in diameter on the interface between the transparent substrate 2 and the protective layer 5. The application of the reproduction-specific reference light and the collection of the reproduction light are performed on the incidence side for the recording-specific reference light on the optical information recording medium 1. The reproduction-specific reference light and the reproduction light are arranged coaxially.

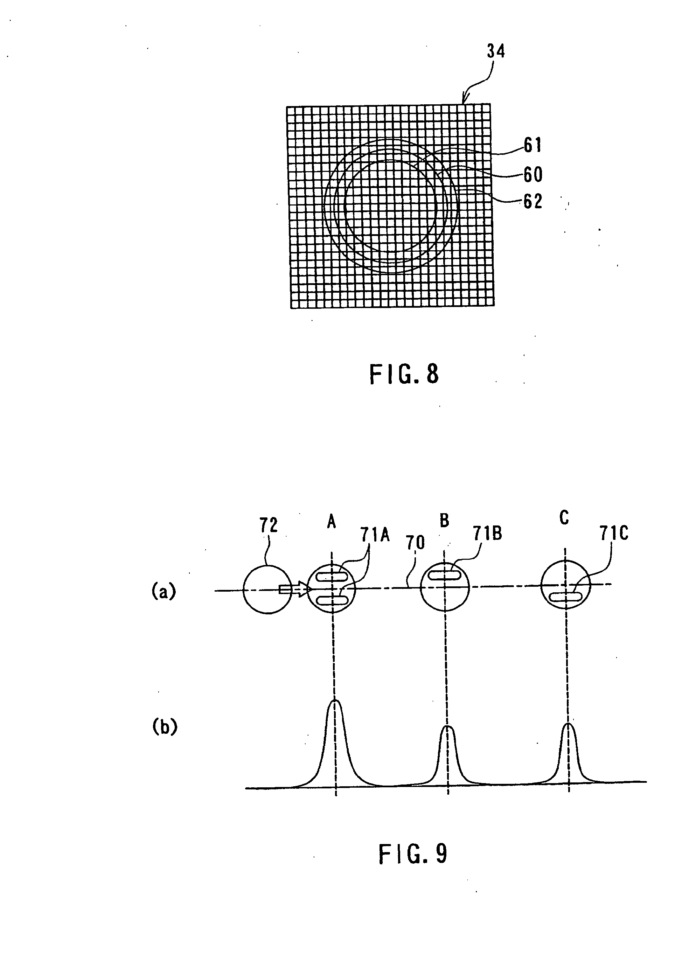

Next, reference is made to FIG. 8 to describe an example of a method for producing the focus error information in the present embodiment. FIG. 8 is an explanatory diagram showing the outline of incident light on the light-receiving surface of the photodetector 34. In the method for producing the focus error information of this example, the focus error information is produced based on the size of the outline of the incident light on the light-receiving surface of the photodetector 34 in the following manner. Initially, in a focused state where the light beam from the objective lens 31 converges to become minimum in diameter on the interface between the transparent substrate 2 and the protective layer 5 of the optical information recording medium 1, the incident light on the light-receiving surface of the photodetector 34 shall have the outline designated by the reference numeral 60 in FIG. 8. If the position at which the light beam from the objective lens 31 has the minimum diameter shifts back from the interface between the transparent substrate 2 and the protective layer 5, the outline of the incident light on the light-receiving surface of the photodetector 34 decreases in diameter as shown by the reference numeral 61 in FIG. 8. On the other hand, if the position at which the light beam from the objective lens 31 has the minimum diameter shifts forward beyond the interface between the transparent substrate 2 and the protective layer 5, the outline of the incident light on the light-receiving surface of the photodetector 34 increases in diameter as shown by the reference numeral 62 in FIG. 8. Consequently, a focus error signal can be obtained by detecting a signal responsive to a change in the diameter of the outline of the incident light on the light-receiving surface of the photodetector 34, with reference to the focused state. Specifically, for example, the focus error signal can be produced based on fluctuations in the number of pixels corresponding to a bright area in the light-receiving surface of the photodetector 34 with reference to the focused state.

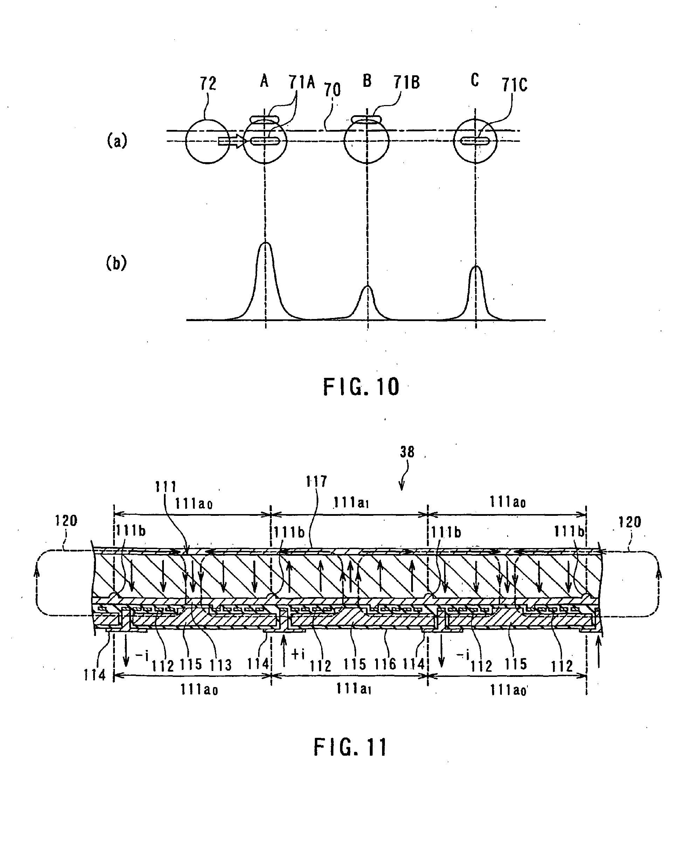

Next, with reference to FIG. 9 and FIG. 10, description will be given of an example of a method for producing tracking error information and a method for tracking servo according to the embodiment. In this example, as shown in FIG. 9(a), the address servo areas 6 of the optical information recording medium 1 have two pits 71A, a single pit 71B, and a single pit 71C that are arranged in this order in a traveling direction of a light beam 72 along a track 70, as positioning information to be used for tracking servo. The two pits 71A are arranged at a position designated by the symbol A in FIG. 9, symmetrically across the track 70. The pit 71B is located at a position designated by the symbol B in FIG. 9, being shifted to one side with respect to the track 70.

The pit 71C is located at a position designated by the symbol C in FIG. 9, being shifted to the side opposite from the pit 71B, with respect to the track 70.

As shown in FIG. 9(a), in the case where the light beam 72'travels on the track 70 accurately, the respective total amounts of light received by the photodetector 34 at the time when the light beam 72 passes through the positions A, B, and C are as shown in FIG. 9(b). That is, the amount of light received is greatest at the time of passing through the position A, and the amounts of light received at the time of passing through the position B and at the time of passing through the position C are the same, which are lower than the amount at the time of passing through the position A.

On the other hand, as shown in FIG. 10(a), in the case where the light beam 72 travels off the track 70 with a deviation toward the pit 71C, the respective total amounts of light received by the photodetector 34 at the time when the light beam 72 passes through the positions A, B, and C are as shown in FIG. 10(b). That is, the amount of light received is greatest at the time of passing through the position A, second greatest at the time of passing through the position C, and smallest at the time of passing through the position B. The absolute value of difference between the amounts of light received at the time of passing through the position B and at the time of passing through the position C increases with increasing amount of deviation of the light beam 72 from the track 70.

Although not shown, when the light beam 72 travels off the track 70 with a deviation toward the pit 71B, the amount of light received is greatest at the time of passing through the position A, second greatest at the time of passing through the position B, and smallest at the time of passing through the position C. The absolute value of difference between the amounts of light received at the time of passing through the position B and at the time of passing through the position C increases with increasing amount of deviation of the light beam 72 from the track 70.

From the foregoing, the direction and magnitude of deviation of the light beam 72 with respect to the track 70 can be seen from a difference between the amounts of light received at the time of passing through the position B and at the time of passing through the position C. Consequently, the difference between the amounts of light received at the time of passing through the position B and at the time of passing through the position C can be used as a tracking error signal. The pits 71A serve as the reference of timing for detecting the amounts of light received at the time of passing through the position B and at the time of passing through the position C.

Specifically, the tracking servo in this example is performed in the following manner. Initially, the timing at which the total amount of light received by the photodetector 34 reaches a first peak, i.e., the timing of passing through the position A, is detected. Next, the timing of passing through the position B and the timing of passing through the position C are estimated with reference to the timing of passing through the position A. Next, the amount of light received at the time of passing through the position B and the amount of light received at the time of passing through the position C are detected at the respective estimated timing. Finally, a difference between the amounts of light received at the time of passing through the position B and at the time of passing through the position C is detected as a tracking error signal. Then, tracking servo is performed based on the tracking error signal so that the light beam 72 follows the track 70 all the time. However, when the light beam 72 passes through the data areas 7, no tracking servo is performed and the state at the time of passing through the previous address servo area 6 is maintained.

A method for producing the tracking error information and a method for tracking servo in the present embodiment are not limited to the foregoing ones, but a push-pull method may also be used, for example. In this case, the address servo areas 6 are provided with a row of pits'along the direction of the track, as positioning information to be used for tracking servo, and then, a variation in the shape of light incident on the light-receiving surface of the photodetector 34 is detected to produce tracking error information.

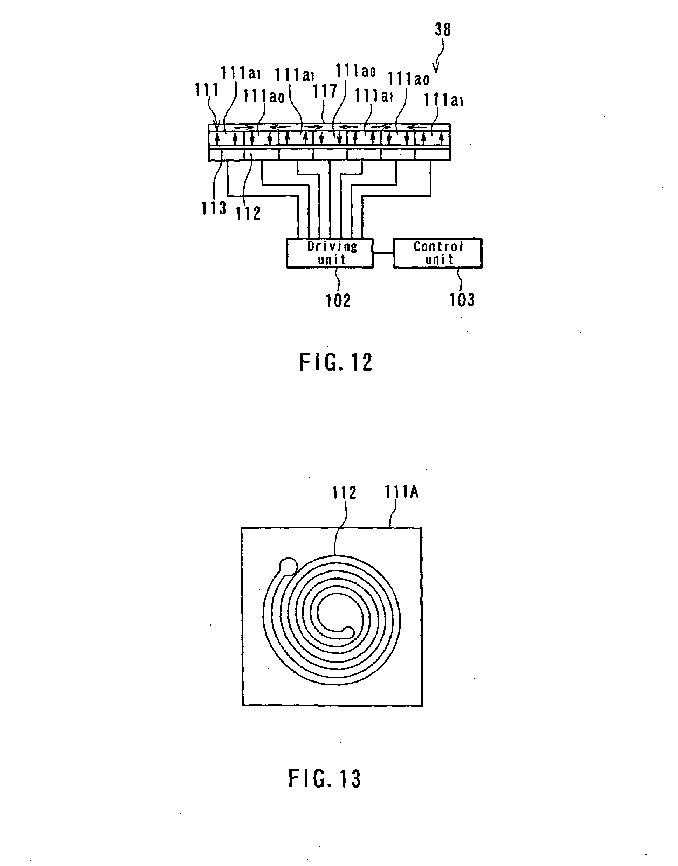

Next, with reference to FIG. 11 and FIG. 12, description will be given of an example of configuration of the phase spatial light modulator 38 in the present embodiment. The phase spatial light modulator 38 of this example utilizes a magneto-optic effect. FIG. 11 is a cross-sectional view showing essential parts of the phase spatial light modulator 38 in this example. FIG. 12 is an explanatory diagram showing the phase spatial light modulator 38 and its peripheral circuits in this example.

As shown in FIG. 11 and FIG. 12, the phase spatial light modulator 38 in this example comprises: a magnetization setting layer 111 that is made of a magneto-optical material and includes a plurality of pixels in each of which a direction of magnetization is set independently and each of which causes a rotation of a direction of polarization of incident light according to its direction of magnetization by a magneto-optic effect; thin-film coils 112 serving as a plurality of field generating elements which are arranged in correspondence with the respective pixels of the magnetization setting layer 111, for generating magnetic fields for setting directions of magnetization in the respective pixels independently of each other; and a reflecting layer 113 provided between the magnetization setting layer 111 and the thin-film coils 112, for reflecting light.

Domain wall movement suppressing portions 111b for suppressing the movements of magnetic domain walls are 'provided in the magnetization setting layer 111 at borders between adjacent pixels. For example, the domain wall movement suppressing portions 111b may be projections such as shown in FIG. 11.

In FIG. 11 and FIG. 12, the reference numeral $111a_0$ represents a pixel that is magnetized downward (hereinafter referred to as OFF pixel). The reference numeral $111a_1$ represents a pixel that is magnetized upward (hereinafter referred to as ON pixel).

FIG. 13 is a plan view of the thin-film coil 112. In FIG. 13, the reference numeral 111A represents the area of a single pixel.

In FIG. 11 and FIG. 12, the upper surface of the magnetization setting layer 111 is the surface for light to be incident on. The magnetization setting layer 111 has transparency at least to the light in use. The thin-film coils 112 are arranged to be adjacent to the surface of the magnetization setting layer 111 opposite from the surface for light to be incident on, with the reflecting layer 113 placed in between.

The reflecting layer 113 is electrically conductive. One end, or the inner end, for example, of each of the thin-film coils 112 is connected to the reflecting layer 113. A terminal 114 is connected to the other end, or the outer end, for example, of each of the thin-film coils 112. The reflecting layer 113 also functions as one of two conducting paths for energizing the thin-film coils 112. The terminals 114 constitute the other of the two conducting paths for energizing the thin-film coils 112.

The phase spatial light modulator 38 further comprises a magnetic-path-forming portion 115 made of a soft magnetic material. The magnetic-path-forming portion 115 is placed on the side of the thin-film coils 112 opposite from the magnetization setting layer 111, and forms part of magnetic paths 120 corresponding to the magnetic fields generated by the thin-film coils 112. An insulating layer 116 is formed around the thin-film coils 112, the terminals 114, and the magnetic-path-forming portion 115.

The phase spatial light modulator 38 further comprises a soft magnetic layer 117 made of a soft magnetic material. The soft magnetic layer 117 is provided to be adjacent to the surface of the magnetization setting layer 111 opposite from the thin-film coils 112, and forms another part of the magnetic paths 120 corresponding to the magnetic fields generated by the thin-film coils 112. The soft magnetic layer 117 has transparency at least to the light in use.

As shown in FIG. 12, the individual thin-film coils 112 are connected to a driving unit 102 for energizing the individual thin-film coils 112 independently, through the terminals 114, the reflecting layer 113, and wiring connected thereto. The driving unit 102 supplies a positive- or negative-pulsed current to the thin-film coils 112 at cycles of the order of nanoseconds, for example. The driving unit 102 is controlled by a control unit 103.

The magnetization setting layer 111 has high coercivities of Hc and -Hc. When the magnetization setting layer 111 is magnetized in a positive direction, application of a negative magnetic field exceeding Hc in absolute value inverts the direction of magnetization.

When the magnetization setting layer 111 is magnetized in a negative direction, application of a positive magnetic field exceeding He in absolute value inverts the direction of magnetization. The thin-film coils 112 generate a positive or negative magnetic field exceeding Hc in absolute value. Meanwhile, the soft magnetic layer 117 has an extremely low coercivity. The direction of magnetization of the soft magnetic layer 117 is easily inverted by application of a low magnetic field. The magnetic-path-forming portion 115 has the same characteristic as that of the soft magnetic layer 117.

The magnetization setting layer 111 may be made of any magneto-optical material having a magneto-optic effect, whereas a magnetic garnet thin film or a one-dimensional magnetic photonic crystal is preferably used in particular. 122 Typical magnetic garnet thin films are rare-earth iron type garnet thin films. Methods for producing a magnetic garnet thin film include one in which a monocrystalline magnetic garnet thin film is formed on a substrate of gadolinium gallium garnet (GGG) or the like by liquid-phase epitaxy method (LPE method) or sputtering.

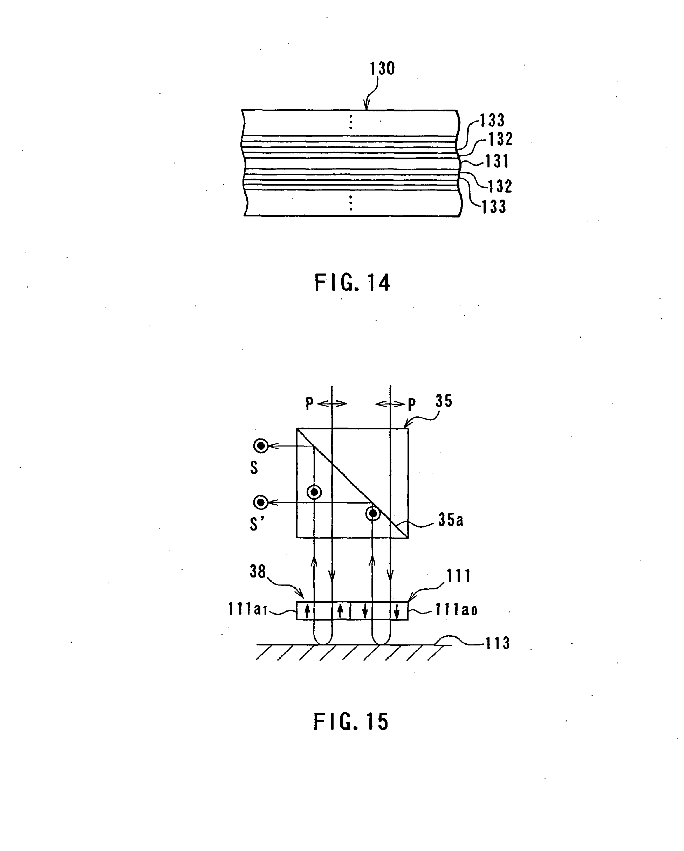

FIG. 14 is an explanatory diagram showing a structure of a one-dimensional magnetic photonic crystal. This one-dimensional magnetic photonic crystal 130 has a structure in which dielectric multilayer films are formed on both sides of a magnetic substance layer 131. Rare-earth iron garnet, 'bismuth-substituted rare-earth iron garnet or the like is used as the material of the magnetic substance layer 131. The dielectric multilayer films are made by laminating $SiO_2$ films 132 and $Ta_2O_5$ films 133 alternately, for example. The layer structure of the one-dimensional magnetic photonic crystal 130 has a cycle on the order of the wavelengths of the light in use. The use of the one-dimensional magnetic photonic crystal 130 allows to achieve greater Faraday rotation angles.

The phase spatial light modulator 38 of this example may be fabricated by forming all the components monolithically, or by forming a plurality of parts separately and then assembling the plurality of parts. In the case of forming the phase spatial light modulator 38 from a plurality of separate parts, a part including the soft magnetic layer 117 to the reflecting layer 113 may be separated from the other parts, for example. All the components of the phase spatial light modulator 38 of this example can be fabricated by using semiconductor fabrication processes.

Next, the operation of the phase spatial light modulator 38 of this example will be described with reference to FIG. 15. In the phase spatial light modulator 38 of this example, the thin-film coils 112 are supplied with a positive- or negative-pulsed current selectively according to modulation information. As a result, the thin-film coils 112 apply a magnetic field to each pixel of the magnetization setting layer 111 separately. By simple calculation, supplying a pulsed current of the order of 40 mA in peak value to the thin-film coils 112 can generate a pulsed magnetic field of the order of 100 Oe at a center of the thin-film coils 112. This magnetic field can invert magnetization of each pixel.

In each pixel, when a magnetic field in a direction opposite to the existing direction of magnetization is applied, a magnetic domain which is magnetized in the same direction as the applied magnetic field is produced, and then, this magnetic domain expands. The expansion of the magnetic domain stops when the magnetic domain walls reach the domain wall movement suppressing portions 111b. As a result, an entire single pixel is magnetized in the same direction as that of the applied magnetic field. In this way, the thin-film coils 112 apply magnetic fields to the respective pixels of the magnetization setting layer 111 independently of each other so that the directions of magnetization of the respective pixels of the magnetization setting layer 111 are set independently.

Light that is incident on the phase spatial light modulator 38 from the side of the soft magnetic layer 117 passes through the soft magnetic layer 117 and then through the magnetization setting layer 111. The light passing through this magnetization setting layer 111 is given a Faraday rotation, that is, a rotation of the direction of polarization according to the direction of magnetization of each pixel of the magnetization setting layer 111 due to the Faraday effect. For example, supposing that the direction of polarization of light passing through an upward-magnetized ON pixel $111a_1$ is rotated by $+\theta_F$, the direction of polarization of light passing through a downward-magnetized OFF pixel $111a_0$ is rotated by $-\theta_F$.

The light having passed through the magnetization setting layer 111 is reflected by the reflecting layer 113, again passes through the magnetization setting layer 111 and the soft magnetic layer 117, and exits the phase spatial light modulator 38. As is the case of passing through the magnetization setting layer 111 before reaching the reflecting layer 113, the light passing through the magnetization setting layer 111 after being reflected by the reflecting layer 113 is subjected to a rotation of the direction of polarization according to the direction of magnetization of each pixel of the magnetization setting layer 111 due to the Faraday effect. Consequently, supposing that the direction of polarization of the light passing through an ON pixel $111a_1$ is rotated by $+\theta_F$ and the direction of polarization of the light passing through an OFF pixel $111a_0$ is rotated by $-\theta_F$ as mentioned above, then the direction of polarization of light that exits the phase spatial light modulator 38 after passing through an ON pixel $111a_1$ twice, i.e., forward and backward, is rotated by $+2\theta_F$, and the direction of polarization of light that exits the phase spatial light modulator 38 after passing through an OFF pixel $111a_0$ twice, i.e., forward and backward, is rotated by $-2\theta_F$.

In the phase spatial light modulator 38, the rotation angle $+2\theta_F$ of the direction of polarization of the light passing through an ON pixel $111a_1$ of the magnet-

ization setting layer 111 twice, i.e., forward and backward, is set at 90°, while the rotation angle $-2\theta_F$ of the direction of polarization of the light passing through an OFF pixel $111a_0$ twice, i.e., forward and backward, is set at -90°.

As shown in FIG. 15, P-polarized light, which has been transmitted through the polarization beam splitter surface 35a of the polarization beam splitter 35, is incident on the phase spatial light modulator 38. This light passes through the magnetization setting layer 111 of the phase spatial light modulator 38, is reflected by the reflecting layer 113, passes through the magnetization setting layer 111 again, and returns to the polarization beam splitter 35. Here, the light that has passed through an ON pixel $111a_1$ twice, i.e., forward and backward, is subjected to a rotation of the direction of polarization by 90° to become S-polarized light. The light that has passed through an OFF pixel $111a_0$ twice, i.e., forward and backward, is subjected to a rotation of the direction of polarization by -90° to become S-polarized light (in FIG. 15, designated by the symbol S'). Thus, the return light from the phase spatial light modulator 38 is all reflected by the polarization beam splitter surface 35a.

While the return light from the phase spatial light modulator 38 is all S-polarized, the light that has passed through an ON pixel $111a_1$ and the light that has passed through 'an OFF pixel $111a_0$ are different from each other by π (rad) in phase. Thus, the phase spatial light modulator 38 of this example can spatially modulate the phase of the light by rotating the direction of polarization of the outgoing light by 90° with respect to the direction of polarization of the incident light, and by setting the phase of the outgoing light for each pixel at either of two values differing by π (rad) from each other.

In the phase spatial light modulator 38 of this example, the thin-film coils 112 set the directions of magnetization of the individual pixels of the magnetization setting layer 111 independently of each other, thereby causing a rotation of the direction of polarization of light incident on the magnetization setting layer 111 according to the direction of magnetization of each pixel. The light incident on the magnetization setting layer 111 is thereby modulated spatially. The directions of magnetization of the individual pixels of the magnetization setting layer 111 can be switched within several nanoseconds or so. The phase spatial light modulator 38 of this example has the thin-film coils 112 for the individual pixels so that the directions of magnetization of the individual pixels can be set independently of each other. It is therefore possible to set the directions of magnetization of all the pixels at the same time. Consequently, in the phase spatial light modulator 38 of this example, the response time of the entire phase spatial light modulator 38. can be on the order of several nanoseconds, i.e., the same as that of the pixels. This allows extremely high operation speed.

The phase spatial light modulator 38 of this example is high in reliability since it has a simple structure free of mechanical driving parts and contains no fluid such as liquid crystal. Furthermore, since the phase spatial light modulator 38 of this example is simple in structure and is mass-producible by using semiconductor fabrication processes, it is possible to reduce manufacturing cost.

The phase spatial light modulator 38 of this example is simplified in structure since the reflecting layer 113 also functions as one of the two conducting paths for energizing the thin-film coils 112.

In the phase spatial light modulator 38 of this example, the pixels of the magnetization setting layer 111 can be uniformized in the state of material and the state of magnetization. In the phase spatial light modulator 38 of this example, the thin-film coils 112 for switching the state of the pixels are arranged to be adjacent to the surface of the magnetization setting layer 111 opposite from the surface for light to be incident on, with the reflecting layer 113 in between. Thus, the thin-film coils 112 exert no influence on the light to be modulated. Consequently, according to the phase spatial light modulator 38 of this example, it is possible to prevent the outgoing light from becoming uneven due to causes other than the modulation information.

Since no transparent electrodes are arranged on the light path, the phase spatial light modulator 38 of this example is free of characteristic deterioration resulting from light dispersion and is advantageous for attaining finer pixels in particular.

According to the phase spatial light modulator 38 of this example, the thin-film coils 112 generate magnetic fields for setting the directions of magnetization of the individual pixels of the magnetization setting layer 111. It is therefore possible to reduce the currents for inverting magnetization of the pixels.

The phase spatial light modulator 38 of this example can narrow magnetic flux effectively since it has the soft magnetic layer 117 and the magnetic-path-forming portion 115 each forming part of the magnetic paths 120 corresponding to the magnetic fields generated by the thin-film coil 112. As a result, the phase spatial light modulator 38 of this example can effectively utilize the magnetomotive force caused by the thin-film coils 112 to set the magnetization in the pixels.

In the phase spatial light modulator 38 of this example, the state of magnetization of the individual pixels of the magnetization setting layer 111 is maintained unless the thin-film coils 112 are driven. The phase spatial light modulator 38 can thus retain the modulation information.

While the phase spatial light modulator 38 described above sets the phase of outgoing light at either of two values for each pixel, the optical information recording/reproducing apparatus according to the embodiment may use, instead of this phase spatial light modulator 38, one capable of setting the phase of the outgoing light at any of three or more values for each pixel.

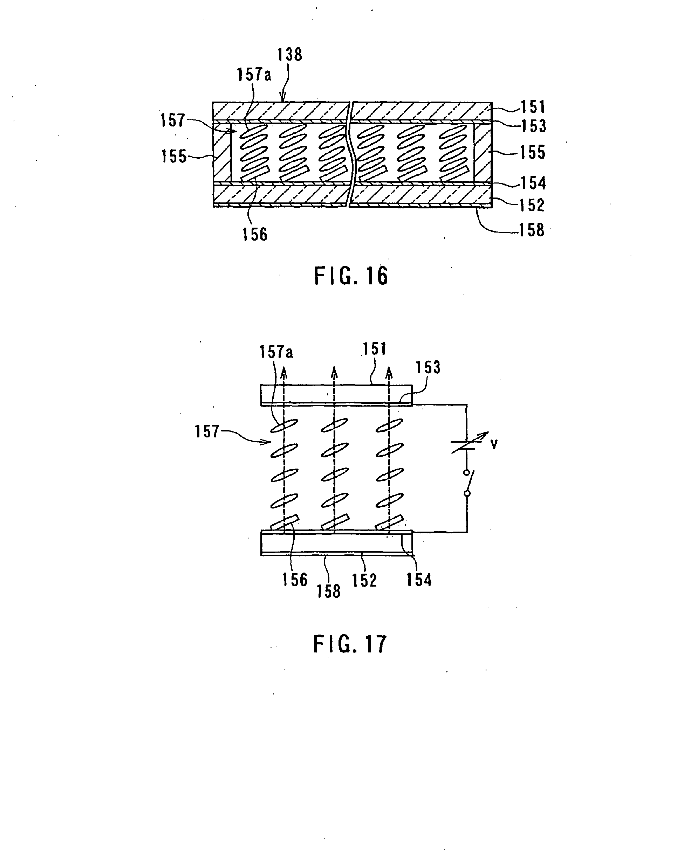

FIG. 16 shows an example of configuration of the phase spatial light modulator which is capable of setting the phase of outgoing light at any of three or more values for each pixel. This phase spatial light modulator 138 is provided with two glass substrates 151 and 152 arranged to oppose to each other. The mutually opposing surfaces of the glass substrates 151 and 152 are provided with transparent electrodes 153 and 154, respectively. The glass substrates 151 and 152 are spaced at a predetermined distance by spacers 155. Liquid crystal is. filled into the space formed by the glass substrates 151, 152 and the spacers 155, thereby forming a liquid crystal layer 157. A number of column-shaped orientation portions 156 are formed to protrude obliquely from a surface of the glass substrate 152 facing the liquid crystal layer 157. These. orientation portions 156 can be formed, for example, by depositing a vapor deposition material on the glass substrate 152 in an oblique direction. Liquid crystal molecules 157a in the liquid crystal layer 157 are oriented such that their major-axis directions are along the longitudinal direction of the orientation portions 156, i.e., in a direction oblique to the glass substrate 152. The liquid crystal molecules 157a shall be positive in dielectric anisotropy. In addition, a reflecting film 158 is formed on the external surface of the glass substrate 152.

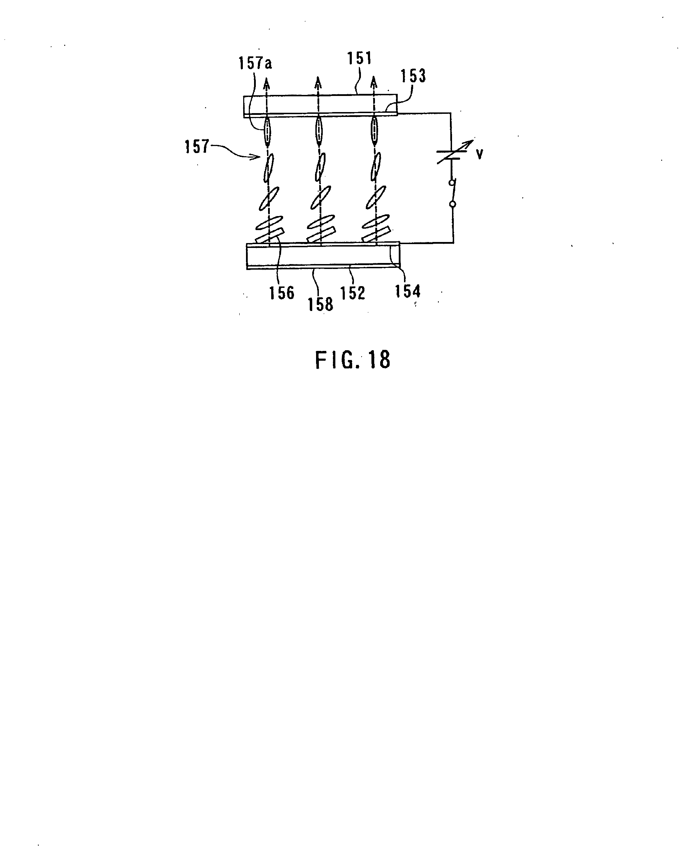

Next, the operation of the phase spatial light modulator 138 shown in FIG. 16 will be described with reference to FIG. 17 and FIG. 18. Light is incident on the phase spatial light modulator 138 from the side of the glass substrate 151, passes through the glass substrate 151, the liquid crystal layer 157, and the glass substrate 152, is reflected by the reflecting film 158, and passes through the glass substrate 152, the liquid crystal layer 157, and the glass substrate 151 again to outgo. The transparent electrodes 153 and 154 can apply a voltage to between the transparent electrodes 153 and 154 for each pixel independently.

As shown in FIG. 17, when a voltage V is not applied to between the transparent electrodes 153 and 154, the liquid crystal molecules 157a are oriented such that their major-axis directions are in a direction oblique to the glass substrates 151 and 152. In contrast, as shown in FIG. 18, when a voltage V sufficient to change the orientations of the liquid crystal molecules 157a is applied to between the transparent electrodes 153 and 154, at least some of the liquid crystal molecules 157a change in orientation so that their major-axis directions approach a direction perpendicular to the glass substrates 151 and 152. In this case, liquid crystal molecules 157a closer to the glass substrate 151, which has no orientation portion 156, are more apt to change in orientation. Besides, the number of liquid crystal molecules 157a which change in orientation and the amounts of the change in orientation increase with increasing voltage V.

When liquid crystal molecules 157a change in orientation, the angles formed between the direction of polarization of incident light and the major-axis directions of the liquid crystal molecules 157a change. The liquid crystal molecules 157a differ in refractive index between when the direction of polarization of light passing therethrough is parallel to the major-axis directions of the liquid crystal molecules 157a and when it is perpendicular to the same. Thus, light which has passed through the liquid crystal layer 157 with a voltage V applied has a phase difference from light which has passed through the liquid crystal layer 157 with no voltage V applied. When the voltage V falls within a predetermined range, the phase difference increases with an increase in the voltage V. Moreover, when the voltage V is constant, the phase difference increases with an increase in the thickness of the liquid crystal layer 157. Consequently, if the thickness of the liquid crystal layer 157 and the maximum value of the voltage V are set so that the maximum phase difference at the time when light passes through the liquid crystal layer 157 twice, i.e., forward and backward, should be π (rad), it is possible to set the phase difference arbitrarily within a range of 0 to π (rad) by controlling the voltage V.

Through the operation described above, the phase spatial light modulator 138 can set the phase of the outgoing light at any of three or more values for each pixel.

The phase spatial light modulator 138 does not cause a rotation of a direction of polarization of light. Thus, when the phase spatial light modulator 138 is used instead of the phase spatial light modulator 38, the polarization beam splitters 35 and 33 shown in FIG. 3 are replaced with beam splitters each having a semi-reflecting surface. Alternatively, a quarter-wave plate may be provided between the polarization beam splitter 35 and the phase spatial light modulator 138, so that P-polarized light from the polarization beam splitter 35 is converted into circularly-polarized light by the quarter-wave plate to cause the light to be incident on the phase spatial light modulator 138, and that the circularly-polarized light from the phase spatial light modulator 138 is converted into S-polarized light by the quarter-wave plate to cause the light to be reflected by the polarization beam splitter surface 35a.

The phase spatial light modulator capable of setting the phase of outgoing light at any of three or more values for each pixel is not limited to the above-described phase spatial light modulator 138 in which liquid crystal is used, but may be one in which micromirror devices are used to adjust the position of the reflecting surface with respect to the traveling direction of incident light pixel by pixel.

As described above, according to the present embodiment, the information light, the recording-specific reference light, and the reproduction-specific reference light are all arranged coaxially and converge to become minimum in diameter at the same position. The optical system for recording and reproduction can thus be simplified in configuration.

According to the embodiment, the information light can carry information using the entire cross section of the beam thereof. Likewise, the reproduction light can also carry information using the entire cross section of the beam thereof.

From the foregoing, the embodiment makes it possible to record and reproduce information through the use of holography and to simplify the configuration of the optical system for recording and reproduction without causing a reduction in the amount of information.

In the embodiment, the optical information recording medium 1 is provided with positioning regions (address servo areas 6) in which information for positioning the information light, the recording-specific reference light, and the reproduction-specific reference light is recorded. The recording/reproducing optical system applies the information light, the recording-specific reference light, and the reproduction-specific reference light to the optical information recording medium 1, letting them converge to become minimum in diameter at the position where the positioning regions are provided. The positioning regions are irradiated with light that converges, like the recording-specific reference light and the reproduction-specific reference light, to become minimum in diameter at the position where the positioning regions are provided, and return light from the positioning regions is detected. It is thereby possible to position the information light, the recording-specific reference light, and the reproduction-specific reference light by using the information recorded in the positioning regions. Thus, the embodiment allows positioning of the information light, the recording-specific reference light, and the reproduction-specific reference light with respect to the optical information recording medium 1 with high accuracy, without complicating the configuration of the recording/reproducing optical system.

Furthermore, in the embodiment, because the positioning regions are located on the incidence side for the recording-specific reference light with respect to the information recording layer 3, return light from the positioning regions will not pass through the information recording layer 3. This prevents the light used for positioning from being disturbed by the information recording layer 3, and it is thus possible to prevent deterioration in the reproduction accuracy of the information for positioning.

[Second Embodiment]

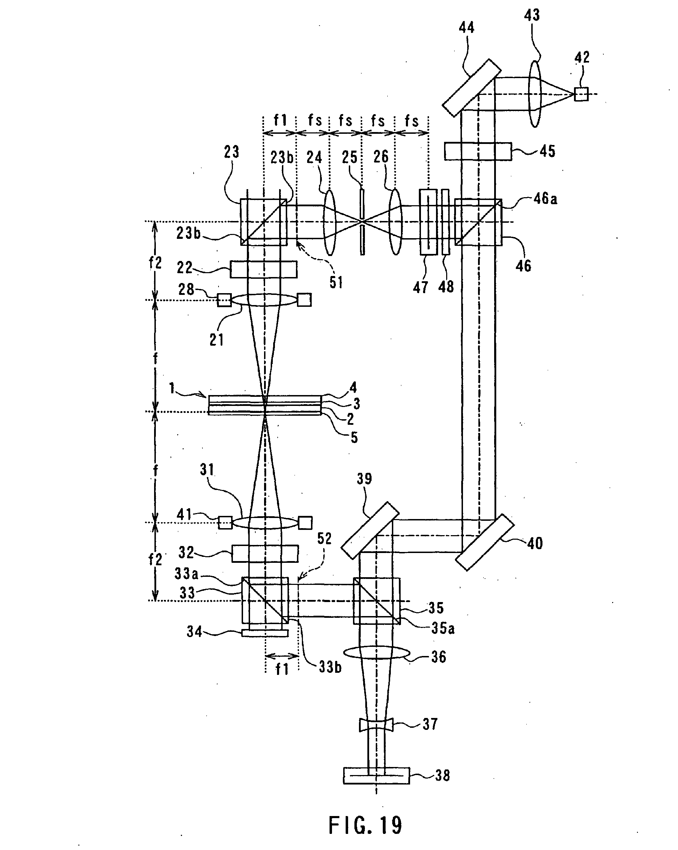

Now, description will be given of an optical information recording/reproducing apparatus and method according to a 'second embodiment of the invention. FIG. 19 is an explanatory diagram showing a general configuration of a recording/reproducing optical system of the optical information recording/reproducing apparatus according to the embodiment. The optical information recording/reproducing apparatus according to the embodiment includes an optical information recording apparatus and an optical information reproducing apparatus according to the embodiment. The recording/reproducing optical system in the embodiment includes a recording optical system of the optical information recording apparatus and a reproducing optical system of the optical information reproducing apparatus.

In the embodiment, information light is generated by spatially modulating the phase of light based on the information to be recorded. The recording/reproducing optical system according to the embodiment has a phase spatial light modulator **47** instead of the spatial light modulator 27 in FIG. 3. Besides, a shutter **48** for selecting a light-transmitting state or a light-blocking state is provided between the phase spatial light modulator **47** and the polarization beam splitter **46**. The phase spatial light modulator **47** has a number of pixels arranged in a matrix, and is capable of spatially modulating the phase of light by selecting the phase of outgoing light from between two values or from among three or more values for each of the pixels. For example, a liquid crystal element may be used as the phase spatial light modulator **47**. The shutter **48** may also be a liquid crystal element.

Servo, information recording, and information reproducing operations of the optical information recording/reproducing apparatus according to the embodiment will now be separately described in that order. The following description also serves to describe the optical information recording method, the optical information reproducing method, and the optical information recording/reproducing method according to the embodiment.

The servo operation will now be described. During the servo operation, the shutter 48 is brought into a blocking state. The remainder of the servo operation is the same as in the first embodiment.

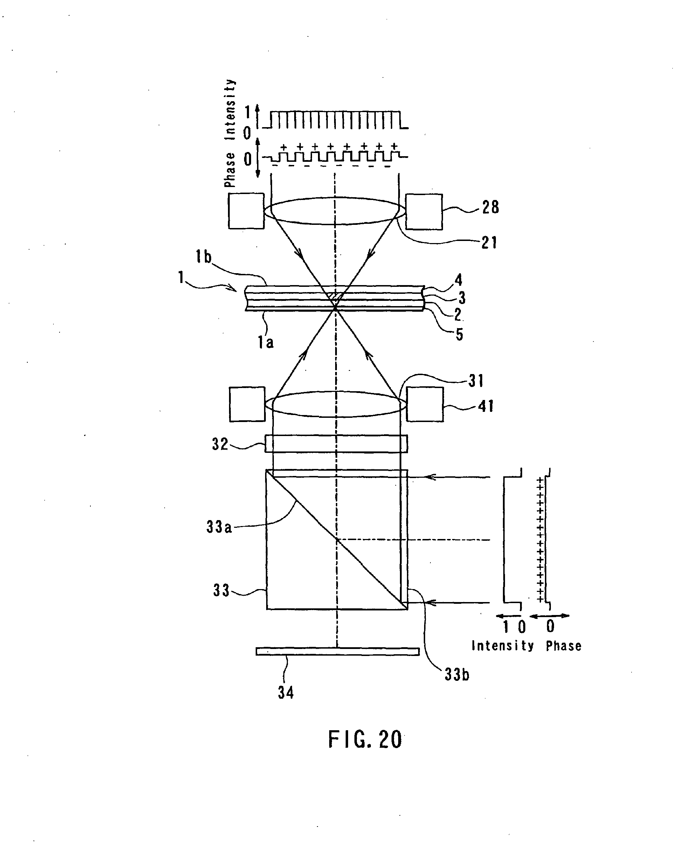

Now, with reference to FIG. 20, a recording operation will be described for situations where information is recorded using information light whose phase is spatially modulated and recording-specific reference light whose phase is not spatially modulated. FIG. 20 is an explanatory diagram showing the state of essential parts of the recording/reproducing optical system during the recording operation. During the recording operation, the shutter 48 is brought into a transmitting state. The phase spatial light modulator 47 spatially modulates the phase of light by selecting the phase of outgoing light from between two values or from among three or more values for each of the pixels according to the information to be recorded. Here, for ease of explanation, the phase spatial light modulator 47 shall spatially modulate the phase of the light by setting the phase of the outgoing light to either a first phase having a phase difference of $+\pi/2$ (rad) from a predetermined reference phase or a second phase having a phase difference of $-\pi/2$ (rad) from the reference phase pixel by pixel. The phase difference between the first phase and the second phase is $\pi$ (rad). In this way, information light having a spatially modulated phase is generated. The information light locally drops in intensity at the borders between first-phase pixels and second-phase pixels.

As in the first embodiment, the information light is collected by the objective lens 21 and applied to the optical information recording medium 1 while converging to become minimum in diameter on the interface between the transparent substrate 2 and the protective layer 5. Then, the information light passes through the information recording layer 3 in the optical information recording medium 1 while converging.

Here, the phase spatial light modulator 38 generates recording-specific reference light by setting the phase of outgoing light for all the pixels to the first phase having a phase difference of $+\pi/2$ (rad) from the predetermined reference phase, without spatially modulating the phase of the light. The phase spatial light modulator 38 may set the phase of the outgoing light for all the pixels to the second phase or a certain phase different from both the first phase and the second phase.

In FIG. 20, the symbol "+" represents the first phase, and the symbol "-" the second phase. FIG. 20 also shows the maximum value of intensity as "1", and the minimum value of intensity as °0°.

As in the first embodiment, the recording-specific reference light is collected by the objective lens 31 and applied to the optical information recording medium 1 while converging to become minimum in diameter on the interface between the transparent substrate 2 and the protective layer 5. Then, the recording-specific reference light passes through the information recording layer 3 in the optical information recording medium 1 while diverging.

As in the first embodiment, the information light and the recording-specific reference light interfere with each other to form an interference pattern in the information recording layer 3. When the power of the light emitted by the light source device **42** has reached a high level suitable for recording, the interference pattern is volumetrically recorded in the information recording layer 3 to form a reflection-type (Lippmann-type) hologram.

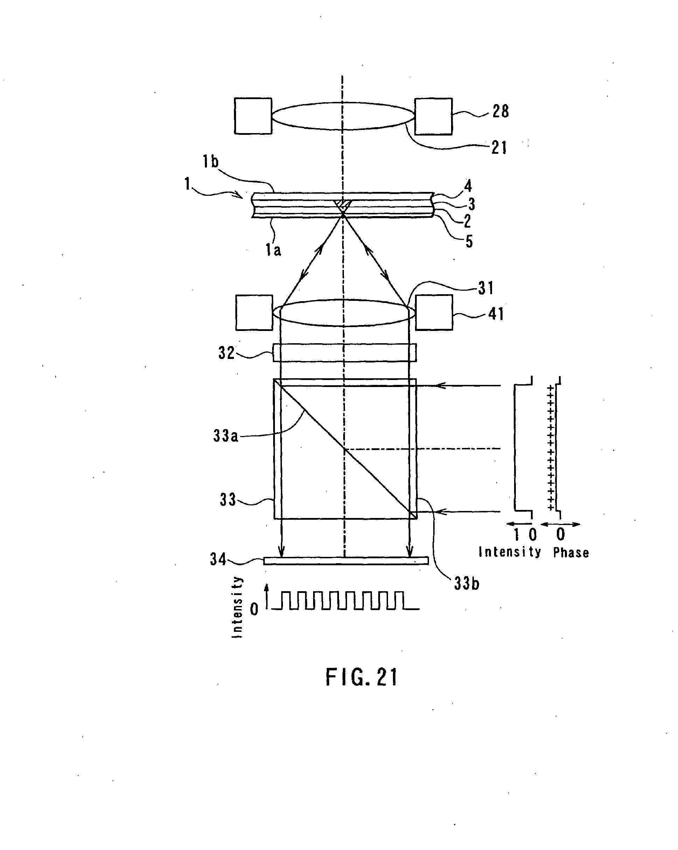

Now, with reference to FIG. 21, an operation for reproducing information that is recorded using the information light whose phase is spatially modulated and the recording-specific reference light whose phase is not spatially modulated. FIG. 21 is an explanatory diagram showing the state of the essential parts of the recording/reproducing optical system during the reproducing operation. During the reproducing operation, the shutter **48** is brought into a blocking state. The phase spatial light modulator **38** generates reproduction-specific reference light by setting the phase of outgoing light for all the pixels to the first phase having a phase difference of $+\pi/2$ (rad) from the predetermined reference phase, without spatially modulating the phase of the light. In FIG. 21, the phases and intensities are indicated in the same manner as in FIG. 20.

As in the first embodiment, the reproduction-specific reference light is collected by the objective lens 31 and applied to the optical information recording medium 1 while converging to become minimum in diameter on the interface between the transparent substrate 2 and the protective layer 5. Then, the reproduction-specific reference light passes through the information recording layer 3 in the optical information recording medium 1 while diverging.

Upon application of the reproduction-specific reference light, reproduction light that corresponds to the information light used for recording is generated in the information recording layer 3. The reproduction light has a spatially modulated phase, as is the case with the information light used for recording. The reproduction light travels toward the transparent substrate 2 while converging, becomes minimum in diameter on the interface between the transparent substrate 2 and the protective layer 5, and exits the optical information recording medium 1 while diverging. Then, the light is collimated through the objective lens 31, passes through the quarter-wave plate 32 and the polarization beam splitter surface 33a of the polarization beam splitter 33, and is incident on the photodetector 34.

Part of the reproduction-specific reference light applied to the optical information recording medium 1 is reflected off the interface between the transparent substrate 2 and the protective layer 5, and exits the optical information recording medium 1 while diverging. It is then collimated through the objective lens 31, and passes through the quarter-wave plate 32 and the polarization beam splitter surface 33a of the polarization beam splitter 33 to impinge on the photodetector 34.

In reality, the reproduction light is superimposed on the reproduction-specific reference light that is reflected off the interface between the transparent substrate 2 and the protective layer 5 to generate composite light, and this composite light is received by the photodetector 34. The composite light has an intensity that is spatially modulated according to the information recorded. Thus, the photodetector 34 detects a two-dimensional intensity pattern of the composite light, from which the information is reproduced.

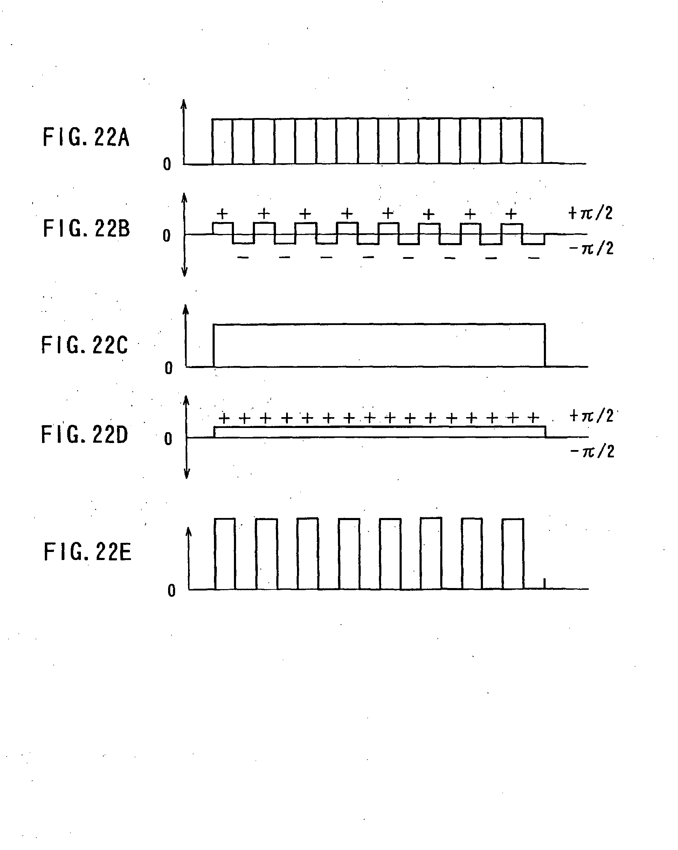

Now, reference is made to FIG. 22A through FIG. 22E to describe in detail the reproduction light, the reproduction-specific reference light, and the composite light used for reproduction mentioned above. FIG. 22A shows the intensity of the reproduction light, FIG. 22B shows the phase of the reproduction light, FIG. 22C shows the intensity of the reproduction-specific reference light, FIG. 22D shows the phase of the reproduction-specific reference light, and FIG. 22E shows the intensity of the composite light. FIG. 22A through FIG. 22E show an example where the phase of the information light for each pixel is set to either the first phase having a phase difference of $+\pi/2$ (rad) from the reference phase, or the second phase having a phase difference of $-\pi/2$ (rad) from the reference phase. Consequently, in the example shown in FIG. 22A through FIG. 22E, the reproduction light has either the first phase or the second phase pixel by pixel as the information light does. The reproduction-specific reference light has the first phase for every pixel. Assuming here that the reproduction light and the reproduction-specific reference light are equal in intensity, the composite light exceeds the reproduction light and the reproduction-specific reference light in intensity at pixels where the reproduction light has the first phase, and the composite light theoretically becomes zero in intensity at pixels where the reproduction light has the second phase, as shown in FIG. 22E.

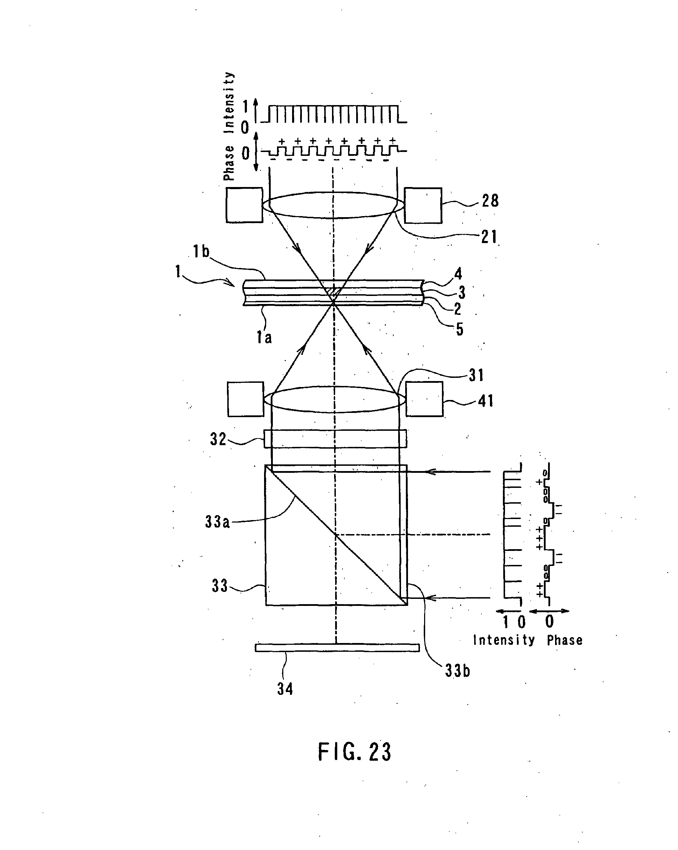

Now, with reference to FIG. 23, a recording operation will be described for situations where information is recorded using information light whose phase is spatially modulated and recording-specific reference light whose phase is spatially modulated. FIG. 23 is an explanatory diagram showing the state of essential parts of the recording/reproducing optical system during the recording operation. During the recording operation, the shutter **48** is brought into a transmitting state. The phase spatial light modulator **47** spatially modulates the phase of light by selecting the phase of outgoing light from between two values or from among three or more values for each of the pixels according to the information to be recorded. Here, for ease of explanation, the phase spatial light modulator 47 shall spatially modulate the phase of the light by setting the phase of the outgoing light to either the first phase or the second phase pixel by pixel. In this way, information light having a spatially modulated phase is generated.

As in the first embodiment, the information light is collected by the objective lens 21 and applied to the optical information recording medium 1 while converging to become minimum in diameter on the interface between the transparent substrate 2 and the protective layer 5. Then, the information light passes through the information recording layer 3 in the optical information recording medium 1 while converging.

The phase spatial light modulator 38 spatially modulates the phase of light by selecting the phase of outgoing light from between two values or from among three or more values for each of the pixels. Here, the phase spatial light modulator 38 shall spatially modulate the phase of the light by setting, for each pixel, the phase of the outgoing light to any one of a predetermined reference phase, a first phase having a phase difference of $+\pi/2$ (rad) from the reference phase, and a second phase having a phase difference of $-\pi/2$ (rad) from the reference phase. In FIG. 23, the reference phase is represented by the symbol "0". In FIG. 23, the phases and intensities are otherwise indicated in the same manner as in FIG. 20. The recording-specific reference light locally drops in intensity at portions where the phase changes.

As in the first embodiment, the recording-specific reference light is collected by the objective lens 31 and applied to the optical information recording medium 1 while converging to become minimum in diameter on the interface between the transparent substrate 2 and the protective layer 5. Then, the recording-specific reference light passes through the information recording layer 3 in the optical information recording medium 1 while diverging.

As in the first embodiment, the information light and the recording-specific reference light interfere with each other to form an interference pattern in the information recording layer 3. When the power of the light emitted by the light source device **42** has reached a high level suitable for recording, the interference pattern is volumetrically recorded in the information recording layer 3 to form a reflection-type (Lippmann-type) hologram.

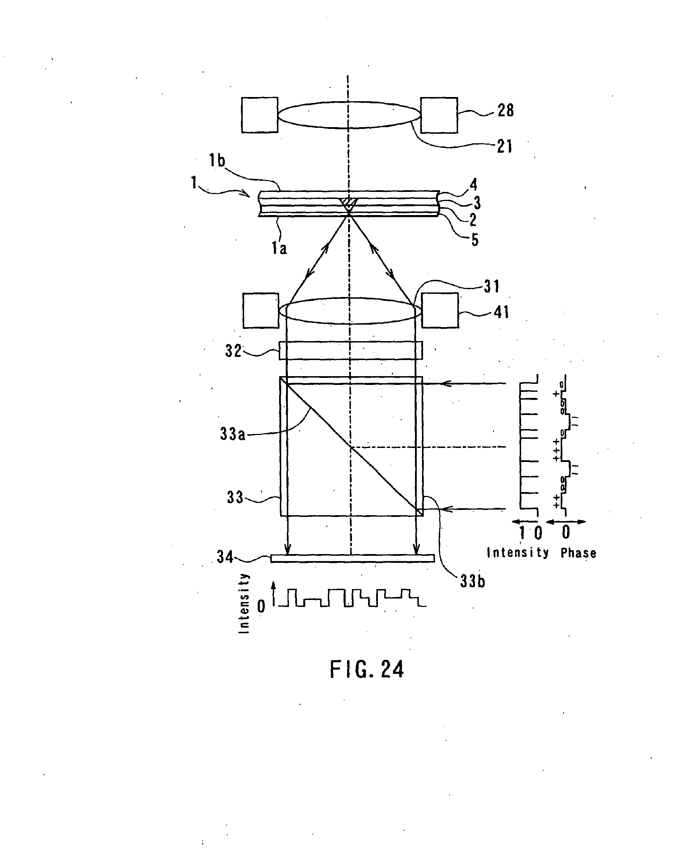

Now, with reference to FIG. 24, an operation for reproducing information that is recorded using the information light whose phase is spatially modulated and the recording-specific reference light whose phase is spatially modulated. FIG. 24 is an explanatory diagram showing the state of the essential parts of the recording/reproducing optical system during the reproducing operation. During the reproducing operation, the shutter **48** is brought into a blocking state. As is the case with the recording operation, the phase spatial light modulator 38 spatially modulates the phase of outgoing light to generate reproduction-specific reference light having a spatially modulated phase. In FIG. 24, the phases and intensities are indicated in the same manner as in FIG. 23.

As in the first embodiment, the reproduction-specific reference light is collected by the objective lens 31 and applied to the optical information recording medium 1 while converging to become minimum in diameter on the interface between the transparent substrate 2 and the protective layer 5. Then, the reproduction-specific reference light passes through the information recording layer 3 in the optical information recording medium 1 while diverging.

Upon application of the reproduction-specific reference light, reproduction light that corresponds to the information light used for recording is generated in the information recording layer 3. The reproduction light has a spatially modulated phase, as the information light used for recording does. The reproduction light travels toward the transparent substrate 2 while converging, becomes minimum in diameter on the interface between the transparent substrate 2 and the protective layer 5, and exits the optical information recording medium 1 while diverging. Then, the light is collimated through the objective lens 31, and passes through the quarter-wave plate 32 and the polarization beam splitter surface 33a of the polarization beam splitter 33 to impinge on the photodetector 34.

Part of the reproduction-specific reference light applied to the optical information recording medium 1 is reflected off the interface between the transparent substrate 2 and the protective layer 5, and exits the optical information recording medium 1 while diverging. It is then collimated through the objective lens **31**, and passes through the quarter-wave plate **32** and the polarization beam splitter surface 33a of the polarization beam splitter 33 to impinge on the photodetector **34**.

In reality, the reproduction light is superimposed on the reproduction-specific reference light that is reflected off the interface between the transparent substrate 2 and the protective layer 5 to generate composite light, and this composite light is received by the photodetector **34**. The composite light has an intensity which is spatially modulated according to the information recorded. Thus, the photodetector **34** detects a two-dimensional intensity pattern of the composite light, from which the information is reproduced.

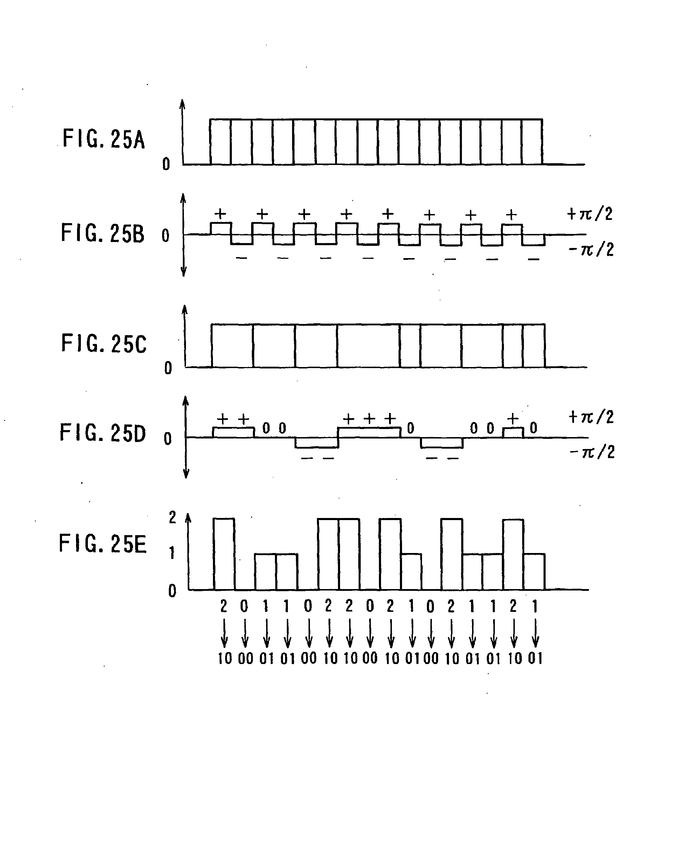

Now, reference is made to FIG. 25A through FIG. 25E to describe in detail the reproduction light, the reproduction-specific reference light, and the composite light used for reproduction mentioned above. FIG. 25A shows the intensity of the reproduction light, FIG. 25B shows the phase of the reproduction light, FIG. 25C shows the intensity of the reproduction-specific reference light, FIG. 25D shows the phase of the reproduction-specific reference light, and FIG. 25E shows the intensity of the composite light. FIG. 25A through FIG. 25E show an example where the phase of the information light is set at either the first phase or the second phase for each pixel, and the phases of the recording-specific reference light and the reproduction-specific reference light are set at any one of the reference phase, the first phase, and the second phase for each pixel. In this case, the phase of the reproduction light for each pixel is either the first phase or the second phase, as is the case with the information light. Consequently, the phase difference between the reproduction light and the reproduction-specific reference light is any of zero, $\pm\pi/2$ (rad), and $\pm\pi$ (rad). Suppose here that the intensity of the reproduction light and the intensity of the reproduction-specific reference light are equal. In that case, as shown in FIG. 25E, the intensity of the composite light becomes maximum at pixels where the phase difference between the reproduction light and the reproduction-specific reference light is zero and becomes theoretically zero at pixels where the phase difference between the reproduction light and the reproduction-specific reference light is $\pm\pi$ (rad). At pixels where the phase difference between the reproduction light and the reproduction-specific reference light is $\pm\pi/2$ (rad), the intensity becomes 1/2 that at a zero-phase-difference pixel. In FIG. 25E, the intensity at the pixels where the phase difference is $\pm\pi$ (rad) is represented by "0", the intensity at the pixels where the phase difference is $\pm\pi/2$ (rad) is represented by "1", and the intensity at the pixels where the phase difference is zero is represented by "2".

In the example shown in FIG. 23, FIG. 24, and FIG. 25A through FIG. 25E, the intensity of the composite light at each pixel has three values. Then, for example, the intensity "0" can be associated with two bits of data "00", the intensity "1" with two bits of data "01", and the intensity "2" with two bits of data "10" as shown in FIG. 25E. Thus, in the example shown in FIG. 23, FIG. 24, and FIG. 25A through FIG. 25E, the composite light can carry an increased amount of information with the same intensity and phase of the reproduction light as compared to the cases where the intensity of the composite light at each pixel has two values as shown in FIG. 20, FIG. 21, and FIG. 22A through FIG. 22E. As a result, the optical information recording medium 1 can be enhanced in recording density.

Next, description will be given in detail of the relationship among the phase of the reproduction light, the phase of the reproduction-specific reference light, and the intensity of the composite light.

The composite light is made by superimposing one of two lightwaves, the reproduction light, on the other, the reproduction-specific reference light. Thus, the intensity I of the composite light is given by the following equation, where $a_0$ is both the amplitude of the reproduction light and the amplitude of the reproduction-specific reference light, and $\delta$ is a phase difference between the reproduction light and the reproduction-specific reference light:

$$
\begin{aligned}
I &= 2a_0{}^2 + 2a_0{}^2\cos\delta \\
&= 2a_0{}^2(1 + \cos\delta) \\
&= 4a_0{}^2\cos^2(\delta/2).
\end{aligned}
$$

The foregoing equation shows that the intensity I of the composite light varies according to the phase difference between the reproduction light and the reproduction-specific reference light. Thus, when the absolute value of the phase difference between the reproduction light and the reproduction-specific reference light, i.e., the absolute value of the phase difference between the information light and the reproduction-specific reference light, has n values (n is an integer no less than 2) within the range of 0 to $\pi$ (rad), for example, the intensity I of the composite light also has the n values.

As described so far, according to the optical information recording/reproducing method of the embodiment, the two-dimensional intensity pattern of the composite light generated by superimposing the reproduction light on the reproduction-specific reference light is detected to reproduce the information recorded in the information recording layer 3 in the form of an interference pattern resulting from the interference between the information light that is spatially modulated in phase based on the information to be recorded, and the recording-specific reference light.

Meanwhile, when the information light and the recording-specific reference light that are spatially modulated in phase are used to record information in the information recording layer 3 of the optical information recording medium 1 as shown FIG. 23, FIG. 24, and FIG. 25A through FIG. 25E, the phase modulation pattern of the information light is determined based on the information to be recorded and the phase modulation pattern of the recording-specific reference light to be used in recording the information. This will be described in detail with reference to FIG. 25A through FIG. 25E. Since the information recorded in the information recording layer 3 is reproduced based on the intensity pattern of the composite light, the information to be recorded is converted into data on a desired intensity pattern of the composite light as shown in FIG. 25E. The phase modulation pattern of the recording-specific reference light is the same as the phase modulation pattern of the reproduction-specific reference light as shown in FIG. 25D. By means of phase calculation using the data on the desired intensity pattern of the composite light as shown in FIG. 25E and the data on the phase modulation patterns of the reproduction-specific reference light and the recording-specific reference light as shown in FIG. 25D, the phase modulation pattern of the information light is determined so as to be the same as the desired phase modulation pattern of the reproduction light as shown in FIG. 25B.

When the reproduction-specific reference light having the phase modulation pattern as that of the recording-specific reference light as shown in FIG. 25D is applied to the information recording layer 3 in which information is recorded by using the information light having the phase modulation pattern determined as described above and the recording-specific reference light, composite light having such an intensity pattern as shown in FIG. 25E is obtained. The information recorded in the information recording layer 3 is reproduced based on the intensity pattern of this composite light.

The phase modulation patterns of the recording-specific reference light and the reproduction-specific reference light may be produced from information unique to an individual who is a user. Such information unique to an individual includes a personal identification number, a fingerprint, a voiceprint, and an iris pattern. In that case, information can be reproduced only by the certain individual who recorded the information in the optical information recording medium 1.

As described in the foregoing, in the present embodiment, to record information, the information light that is spatially modulated in phase based on information to be recorded and the recording-specific reference light are applied to the information recording layer 3 of the optical information recording medium 1, so that the information is recorded in the information recording layer 3 in the form of an interference pattern resulting from interference between the information light and the recording-specific reference light. Then, to reproduce the information, the reproduction-specific reference light is applied to the information recording layer 3, reproduction light thereby generated from the information recording layer 3 is superimposed on the reproduction-specific reference light to produce composite light, and this composite light is detected to thereby reproduce the information.

Consequently, according to the present embodiment, the reproduction light and the reproduction-specific reference light need not be separated from each other when reproducing information. Thus, when recording information, it is not necessary that the information light and the recording-specific reference light form a predetermined angle therebetween when incident on the recording medium. The embodiment therefore allows a compact configuration of the optical system for recording and reproduction.

In the conventional methods for reproduction, the reproduction light and the reproduction-specific reference light are separated to detect the reproduction light alone. Hence, there has been a problem that the reproduced information deteriorates in S/N ratio if the reproduction-specific reference light is also incident on the photodetector for detecting the reproduction light. On the contrary, in the present embodiment, since the reproduction light and the reproduction-specific reference light are both used to reproduce information, the reproduction-specific reference light will not deteriorate the S/N ratio of the reproduced information. Consequently, the present embodiment makes it possible to improve the S/N ratio of the reproduced information.

The remainder of the configuration, operations, and effects of the present embodiment are the same as those of the first embodiment.

[Third Embodiment]

Now, description will be given of an optical information recording/reproducing apparatus and method according to a third embodiment of the invention. The optical information recording/reproducing apparatus according to the embodiment includes an optical information recording apparatus and an optical information reproducing apparatus according to the embodiment. The recording/reproducing optical system in the embodiment includes a recording optical system of the optical information recording apparatus and a reproducing optical system of the optical information reproducing apparatus.

The present embodiment is configured so that information light is generated by spatially modulating the recording-specific reference light having passed through the information recording layer 3 of the optical information recording medium 1 based on the information to be recorded and by reflecting the same.

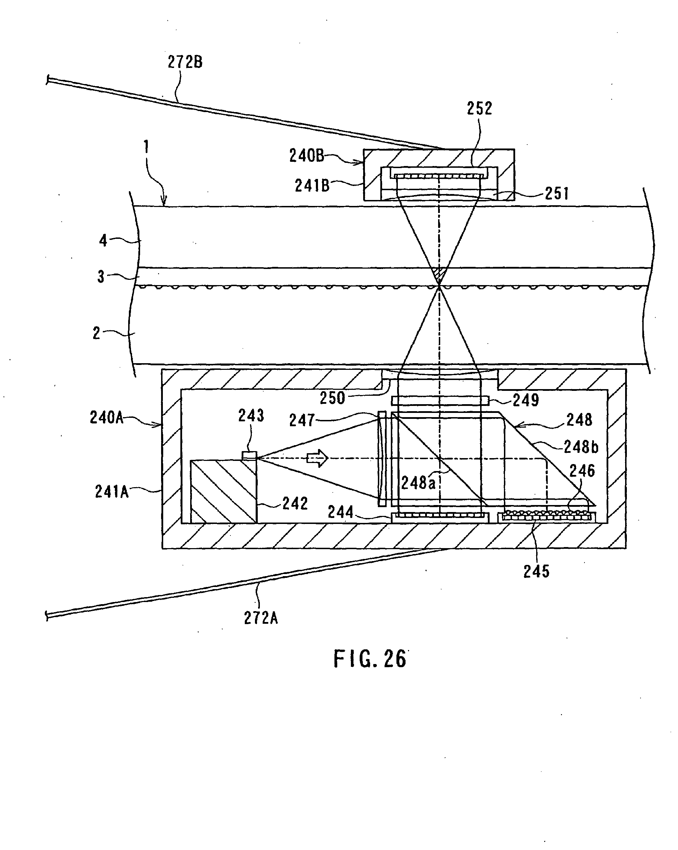

FIG. 26 is an explanatory diagram showing the recording/reproducing optical system of the optical information recording/reproducing apparatus according to the embodiment. In the embodiment, as shown in FIG. 26, while the optical information recording medium 1 has address servo areas 6 on the interface between the transparent substrate 2 and the information recording layer 3 as shown in FIG. 2, it may have such a configuration as shown in FIG. 1. As will be described, no focus servo is performed in this embodiment.

As shown in FIG. 26, the optical information recording/reproducing apparatus according to the embodiment has an optical head lower portion 240A located to face the transparent substrate 2 of the optical information recording medium 1, and an optical head upper portion 240B located to face the transparent substrate 4 of the optical information recording medium 1. The optical head lower portion 240A and the optical head upper portion 240B are opposed to each other with the optical information recording medium 1 in between.

The optical head lower portion 240A and the optical head upper portion 240B respectively have flying-type head bodies 241A and 241B that fly over the optical information recording medium 1. The flying-type head bodies 241A and 241B are connected to a carriage to be described later via suspensions 272A and 272B, respectively.

A semiconductor laser 243 is fixed to the internal bottom of the head body **241A** of the optical head lower portion 240A via a support **242**. A reflection-type phase spatial light modulator **244** and a photodetector **245** are also fixed thereto. A microlens array **246** is attached to the light-receiving surface of the photodetector **245**. In the head body **241A**, a prism block **248** is provided above the phase spatial light modulator **244** and the photodetector **245**. A collimator lens 247 is provided near an end of the prism block 248 closer to the semiconductor laser **243**. The head body 241A has an opening in its surface facing toward the optical information recording medium 1, and an objective lens 250 is provided in this opening. A quarter-wave plate 249 is provided between the objective lens 250 and the prism block 248.

The phase spatial light modulator **244** is the same as the reflection-type phase spatial light modulator 38 in the first embodiment.

The photodetector **245** is the same as the photodetector 34 in the first embodiment. The microlens array **246** includes a plurality of microlenses arranged to oppose to the light-receiving surfaces of the respective pixels of the photodetector **245**.

The prism block **248** has a polarization beam splitter surface 248a and a reflecting surface 248b. Of the polarization beam splitter surface 248a and the reflecting surface 248b, the polarization beam splitter surface 248a is located closer to the collimator lens 247. The polarization beam splitter surface **248a** and the reflecting surface **248b** are both inclined at 45° in the normal direction with respect to the direction of the optical axis of the collimator lens **247**, and they are arranged in parallel to each other.

The phase spatial light modulator **244** is placed below the polarization beam splitter surface **248a**, and the photodetector 245 is placed below the reflecting surface 248b. The quarter-wave plate 249 and the objective lens 250 are placed above the polarization beam splitter surface 248a. The collimator lens 247 and the objective lens **250** may be hologram lenses.

As will be detailed later, the polarization beam splitter surface **248a** of the prism block 248 separates the optical path of the recording-specific reference light and the reproduction-specific reference light yet to pass through the quarter-wave plate **249** from the optical path of the return light from the optical information recording medium 1 having passed through the quarter-wave plate 249, according to the difference in directions of polarization.

The head body **241B** of the optical head upper portion 240B has an opening in its surface facing toward the optical information recording medium 1, and an objective lens 251 is provided in this opening. The objective lens 251 may be a hologram lens or a Fresnel lens. In the head body 241B, a reflection-type spatial light modulator 252 is provided to face the objective lens 251. The spatial light modulator 252 has a number of pixels arranged in a matrix, and is capable of generating information light that carries information by selecting the intensity or phase of light for each of the pixels to spatially modulate the intensity or phase of the outgoing light. For example, a liquid crystal element may be used as the spatial light modulator 252. When the spatial light modulator 252 spatially modulates the phase of light, a shutter using a liquid crystal element or the like is provided between the objective lens 251 and the spatial light modulator 252.

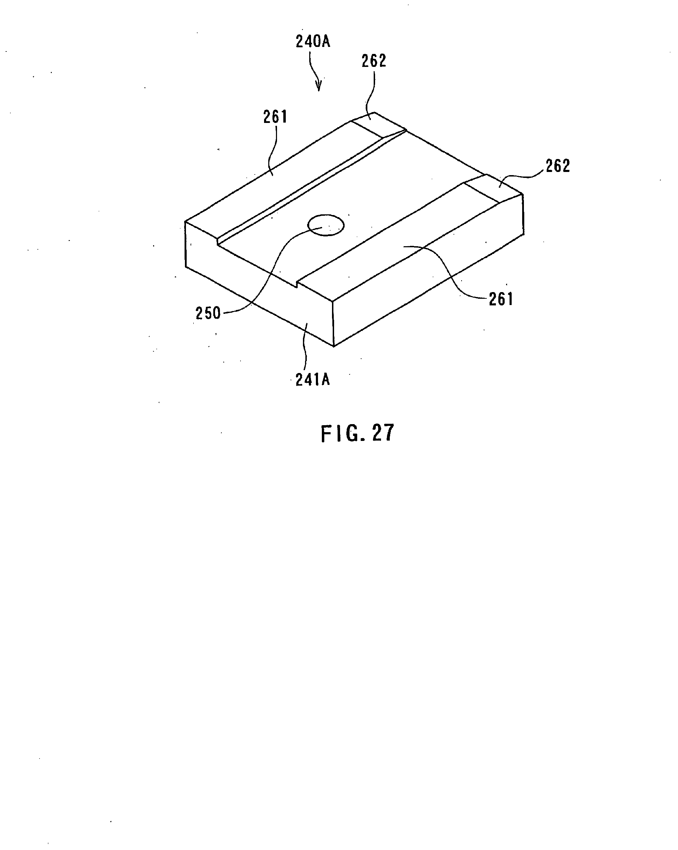

FIG. 27 is a perspective view showing the optical head lower portion **240A**. As shown in FIG. 27, the flying-type head body **241A** of the optical head lower portion 240A has two rail portions 261 that are provided to protrude from the surface that faces toward the optical information recording medium 1. The surfaces of the rail portions 261 closer to the optical information recording medium 1 make an air bearing surface. Tapered portions 262 are provided near the ends of the rail portions 261 on the air inflow side. The tapered portions 262 are shaped to draw apart from the optical information recording medium 1 toward the ends of those portions. By means of the air that flows in from the tapered portions 262, the head body **241A** flies over the optical information recording medium 1 with a small gap between the air bearing surface and the optical information recording medium 1. The objective lens 250 is placed between the two rail portions 261. While the head body 241A is flying, the gap between the air bearing surface and the optical information recording medium 1 is on the order of 0.05 µm and is stable. Consequently, in the optical head lower portion 240A, an almost constant distance is maintained between the objective lens 250 and the optical information recording medium 1 while the head body **241A** is flying, and this eliminates the need for focus servo.

Although not shown, the head body **241B** of the optical head upper portion 240B has the same structure as that of the head body **241A**. Thus, no focus servo is required of the optical head upper portion **240B**, either.

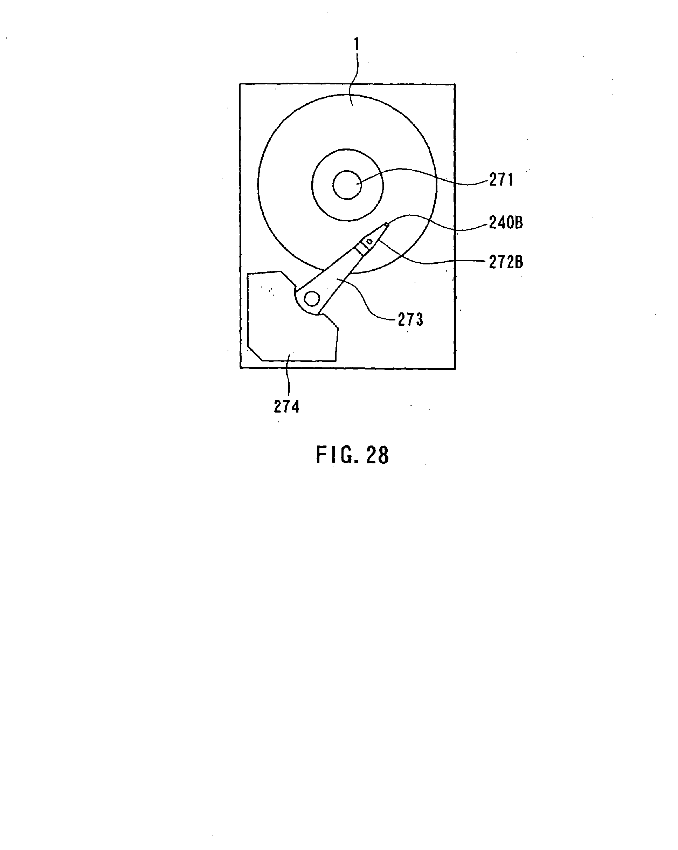

FIG. 28 is a plan view showing the appearance of the optical information recording/reproducing apparatus according to the present embodiment. As shown in FIG. 28, the optical information recording/reproducing apparatus has a spindle 271 to which the optical information recording medium 1 is attached, and a spindle motor, which is not shown, for rotating the spindle 271. The optical information recording/reproducing apparatus further has a carriage 273 having two arms located to sandwich the optical information recording medium 1, and a voice coil motor **274** for driving the carriage 273. The extremity of each arm moves in a direction across the tracks of the optical information recording medium 1. The optical head upper portion 240B is attached to the extremity of the upper arm via the suspension **272B**. Although not shown in FIG. 28, the optical head lower portion **240A** is attached to the extremity of the lower arm via the suspension 272A. In the optical information recording/reproducing apparatus, the carriage 273 and the voice coil motor 274 move the optical head lower portion **240A** and the optical head upper portion 240B in a direction across the tracks of the optical information recording medium 1, thereby effecting a track change and tracking servo.

Description will now be given of the operation of the optical information recording/reproducing apparatus according to the present embodiment. Initially, a servo operation will be described. In the servo operation, if the spatial light modulator 252 is to modulate the intensity of light, all the pixels of the spatial light modulator 252 are brought into a blocking state. If the spatial light modulator 252 is to modulate the phase of light, the shutter is brought into a blocking state. The phase spatial light modulator 244 is set such that light passing through every pixel has the same phase. The power of light emitted by the semiconductor laser **243** is set to a low level suitable for reproduction.

The semiconductor laser **243** emits coherent S-polarized light. The S-polarized laser light emitted by the semiconductor laser **243** is collimated by the collimator lens 247, and is incident on the polarization beam splitter surface 248a of the prism block **248**. The light is reflected by the polarization beam splitter surface **248a**, to be incident on the phase spatial light modulator **244**. The light to exit from the phase spatial light modulator 244 is subjected to a rotation of the direction of polarization by 90° to become P-polarized light.

Since the light that has exited the phase spatial light modulator 244 is P-polarized, it is transmitted through the polarization beam splitter surface **248a** of the prism block **248** and passes through the quarter-wave plate **249** to become circularly polarized light. This light is collected by the objective lens 250, and is applied to the optical information recording medium 1 while converging to become minimum in diameter on the interface between the transparent substrate 2 and the information recording layer 3. Return light that is generated when the light applied to the optical information recording medium 1 by the objective lens 250 is reflected off the interface between the transparent substrate 2 and the information recording layer 3 is collimated by the objective lens 250, passes through the quarter-wave plate 249 to become S-polarized light. This return light is reflected by the polarization beam splitter surface **248a** of the prism block **248**, further reflected by the reflecting surface **248b**, and is incident on the photodetector 245 through the microlens array 246. Address information and tracking error information can be obtained based on the output of the photodetector 245. The method for producing the tracking error information and the method for tracking servo are the same as those in the first embodiment, for example.

Next, description will be given of an information recording operation. For the recording operation, the power of light emitted by the semiconductor laser 243 is set to reach high levels on a pulse basis suitable for recording. For recording, S-polarized laser light emitted by the semiconductor laser 243 is collimated by the collimator lens 247 to be incident on the polarization beam splitter surface 248a of the prism block **248**, and is reflected by the polarization beam splitter surface 248a to be incident on the phase spatial light modulator **244**. When multiplex recording using phase-encoding multiplexing is performed, the phase spatial light modulator **244** spatially modulates the phase of light to generate recording-specific reference light. When multiplex recording using phase-encoding multiplexing is not performed, the phase spatial light modulator 244 will not spatially modulate the phase of light, thereby generating recording-specific reference light having the same phase for all the pixels. The light to exit from the phase spatial light modulator **244** is subjected to a rotation of the direction of polarization by 90° to become P-polarized light.

Since the recording-specific reference light exiting from the phase spatial light modulator **244** is P-polarized, it is transmitted through the polarization beam splitter surface **248a** of the prism block **248** and passes through the quarter-wave plate 249 to become circularly polarized light. The recording-specific reference light is collected by the objective lens 250, and is applied to the optical information recording medium 1 while converging to become minimum in diameter on the interface between the transparent substrate 2 and the information recording layer 3. The recording-specific reference light passes through the information recording layer 3 in the optical information recording medium 1 while diverging.

The recording-specific reference light having passed through the information recording layer 3 further passes through the transparent substrate **4**, is collimated by the objective lens 251 of the optical head upper portion 240B, and is incident on the spatial light modulator 252. The light is spatially modulated in intensity or phase based on the information to be recorded and is reflected by the spatial light modulator 252, to thereby generate information light.

In the present embodiment, when information is recorded using recording-specific reference light having a spatially modulated phase and information light having a spatially modulated phase, the spatial light modulator 252 applies additional phase modulation to the recording-specific reference light having a spatial modulated phase to generate information light having a desired phase modulation pattern. The phase modulation pattern of the information light is determined based on the information to be recorded and the phase modulation pattern of the recording-specific reference light to be used for recording the information.

The information light is collected by the objective lens 251 and applied to the optical information recording medium 1 while converging to become minimum in diameter on the interface between the transparent substrate 2 and the information recording layer 3. Then, the information light passes through the information recording layer 3 in the optical information recording medium 1 while converging.

As in the first or second embodiment, the information light and the recording-specific reference light interfere with each other to form an interference pattern in the information recording layer 3. When the power of the light emitted by the semiconductor laser 243 has reached a high level suitable for recording, the interference pattern is volumetrically recorded in the information recording layer 3 to form a reflection-type (Lippmann-type) hologram.

Description will now be given of a reproducing operation. In the reproducing operation, if the spatial light modulator 252 is to modulate the intensity of light, all the pixels of the spatial light modulator 252 are brought into a blocking state. If the spatial light modulator 252 is to modulate the phase of light, the shutter is brought into a blocking state. The power of light emitted by the semiconductor laser 243 is set to a low level suitable for reproduction.

In the reproducing operation, S-polarized laser light emitted by the semiconductor laser 243 is collimated by the collimator lens 247 to be incident on the polarization beam splitter surface **248a** of the prism block **248**, and is reflected by the polarization beam splitter surface **248a** to be incident on the phase spatial light modulator **244**. If multiplex recording using phase-encoding multiplexing has been performed, the phase spatial light modulator **244** spatially modulates the phase of light to generate reproduction-specific reference light. If multiplex recording using phase-encoding multiplexing has not been performed, the phase spatial light modulator **244** will not spatially modulate the phase of light, thereby generating reproduction-specific reference light having the same phase for all the pixels. The light to exit from the phase spatial light modulator 244 is subjected to a rotation of the direction of polarization by 90° to become P-polarized light.

Since the reproduction-specific reference light exiting from the phase spatial light modulator **244** is P-polarized, it is transmitted through the polarization beam splitter surface **248a** of the prism block **248** and passes through the quarter-wave plate 249 to become circularly polarized light. The reproduction-specific reference light is collected by the objective lens 250, and is applied to the optical information recording medium 1 while converging to become minimum in diameter on the interface between the transparent substrate 2 and the information recording layer 3. The reproduction-specific reference light passes through the information recording layer 3 in the optical information recording medium 1 while diverging.

Upon application of the reproduction-specific reference light, reproduction light that corresponds to the information light used for recording is generated in the information recording layer 3. The reproduction light has a spatially modulated phase or intensity. The reproduction light is collimated by the objective lens 250, and passes through the quarter-wave plate **249** to become S-polarized light. The reproduction light is reflected by the polarization beam splitter surface **248a** of the prism block **248**, further reflected by the reflecting surface **248b**, and is incident on the photodetector 245 through the microlens array 246. When the reproduction light has a spatially modulated intensity, the photodetector **245** detects a two-dimensional intensity pattern of the reproduction light, so that the information is reproduced. When the reproduction light has a spatially modulated phase, the reproduction-specific reference light reflected off the interface between the transparent substrate 2 and the information recording layer 3 is incident on the photodetector **245** as the reproduction light is, so that the reproduction light is superimposed on the reproduction-specific reference light to generate composite light. This composite light is received by the photodetector **245**. The composite light has an intensity which is spatially modulated according to the information recorded. Thus, the photodetector 245 detects a two-dimensional intensity pattern of the composite light, from which the information is reproduced.

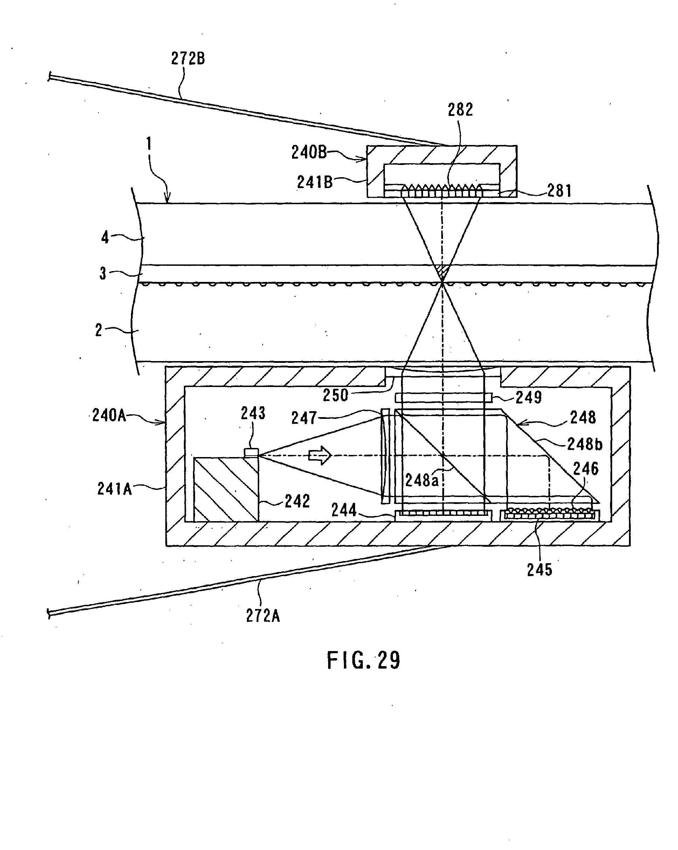

FIG. 29 is an explanatory diagram showing a modified example of the recording/reproducing optical system according to the present embodiment. This modified example has a transmission-type spatial light modulator 281 in place of the objective lens 251 and the reflection-type spatial light modulator 252 in FIG. 26, and also has a corner cube reflector assembly 282 disposed on the side of the spatial light modulator 281 opposite to the optical information recording medium 1. The corner cube reflector assembly 282 has a plurality of corner cube reflectors which are arranged at positions corresponding to the respective pixels of the spatial light modulator **281**.

In the modified example shown in FIG. 29, to record information, the recording-specific reference light having passed through the optical information recording medium 1 passes through the spatial light modulator **281** to be incident on the corner cube reflector assembly **282**. The light having been incident on the spatial light modulator **281** from the optical information recording medium 1 and passed through the pixels of the spatial light modulator **281** is reflected by the corner cube reflectors corresponding to the pixels, and travels in the direction opposite to the direction of incidence on the corner cube reflector assembly **282**. The light then passes through the same pixels of the spatial light modulator 281 again to be incident on the optical information recording medium 1. In this way, the recording-specific reference light having passed through the information recording layer 3 of the optical information recording medium 1 is spatially modulated by the spatial light modulator 281 and reflected by the corner cube reflector assembly 282 to generate information light. This information light is applied to the optical information recording medium 1 while converging to become minimum in diameter on the interface between the transparent substrate 2 and the information recording layer 3. The information light passes through the information recording layer 3 in the optical information recording medium 1 while converging.

As described so far, in the present embodiment, information light is generated by spatially modulating the recording-specific reference light having passed through the information recording layer 3 of the optical information recording medium 1 based on information to be recorded, and by reflecting the same. Thus, according to the embodiment, the recording/reproducing optical system is simplified in configuration. Furthermore, according to the embodiment, an optical path which circumvents the optical information recording medium 1 need not be provided between the optical head lower portion 240A and the optical head upper portion **240B**. This makes it possible to use the flying-type head bodies **241A** and **241B**. The use of the flying-type head bodies **241A** and **241B** eliminates the need for focus servo.

In the present embodiment, instead of using the head bodies **241A** and **241B** of flying type, focus servo may be performed by moving the objective lenses **250**, **251** or the head bodies **241A**, **241B** in a direction of the thickness of the optical information recording medium 1.

The remainder of the configuration, operations, and effects of the present embodiment are the same as those of the first or second embodiment.

The present invention is not limited to the foregoing embodiments but may be modified in various ways. For example, while in the foregoing embodiments the address information and the like are recorded in advance in the form of emboss pits on the address servo areas 6 of the optical information recording medium 1, the emboss pits need not necessarily be provided in advance. Instead, high-power laser light may be applied selectively to a portion of the information recording layer 3 closer to the transparent substrate 2 to selectively change the refractive index in that portion, so as to record address information and the like for formatting.

In the embodiments, information is recorded on a multiplex basis by phase-encoding multiplexing. However, the present invention also covers the cases where multiplex recording by phase-encoding multiplexing is not conducted.

As has been described, according to the optical information recording apparatus or the optical information recording method of the invention, the information light and the recording-specific reference light are arranged coaxially and converge to become minimum in diameter at the same position. Besides, the information light can carry information with the entire cross section of the beam thereof. Thus, the invention makes it possible to record information through the use of holography and simplify the configuration of the optical system for recording without causing a reduction in the amount of information.

In the optical information recording apparatus of the invention, the optical information recording medium may have a positioning region in which information for positioning the information light and the recording-specific reference light is to be recorded; and the recording optical system may apply the information light and the recording-specific reference light, letting them converge to become minimum in diameter at a position along the thickness of the optical information recording medium where the positioning region is provided, and, the optical information recording apparatus may further comprise position control means for controlling the positions of the information light and the recording-specific reference light with respect to the optical information recording medium by using the information recorded in the positioning region. In this case, it is possible to perform an accurate positioning of the light for recording with respect to the optical information recording medium.

In the optical information recording apparatus of the invention, the positioning region may be located on the incidence side for the recording-specific reference light with respect to the information recording layer. In this case, it is possible to prevent the light used for positioning from being disturbed by the information recording layer, and consequently it is possible to prevent deterioration in the reproduction accuracy of the information for positioning.

In the optical information recording apparatus of the invention, the information light generating means may generate the information light by spatially modulating the recording-specific reference light having passed through the information recording layer based on the information to be recorded and reflecting the same. In this case, the information light generating means can achieve yet simpler configuration of the optical system for recording.

According to the optical information reproducing apparatus or the optical information reproducing method of the invention, reproduction-specific reference light is applied to the optical information recording medium such that the reproduction-specific reference light becomes minimum in diameter at a position along the thickness of the optical information recording medium where the positioning region is provided. The application of the reproduction-specific reference light and the collection of reproduction light are performed on the incidence side for the recording-specific reference light on the optical information recording medium. The reproduction-specific reference light and the reproduction light are arranged coaxially. Besides, the reproduction light can carry information with the entire cross section of the beam thereof. Thus, the invention makes it possible to reproduce information through the use of holography and simplify the configuration of the optical system for reproduction without causing a reduction in the amount of information. Moreover, according to the invention, the position of the reproduction-specific reference light with respect to the optical information recording medium is controlled by using the information recorded in the positioning region. It is thus possible to perform an accurate positioning of the light for reproduction with respect to the optical information recording medium.

According to the optical information recording/reproducing apparatus or the optical information recording/reproducing method of the invention, all of the information light, the recording-specific reference light and the reproduction-specific reference light are arranged coaxially and converge to become minimum in diameter at the same position. Besides, the information light can carry information with the entire cross section of the beam thereof. Thus, the invention makes it possible to record and reproduce information through the use of holography and simplify the configuration of the optical system for recording and reproduction without causing a reduction in the amount of information.

In the optical information recording/reproducing apparatus of the invention, the optical information recording medium may have a positioning region in which information for positioning the information light, the recording-specific reference light and the reproduction-specific reference light is to be recorded; and the recording/reproducing optical system may apply the information light, the recording-specific reference light and the reproduction-specific reference light, letting them converge to become minimum in diameter at a position along the thickness of the optical information recording medium where the positioning region is provided, and, the optical information recording/reproducing apparatus may further comprise position control means for controlling the positions of the information light, the recording-specific reference light and the reproduction-specific reference light with respect to the optical information recording medium by using the information recorded in the positioning region. In this case, it is possible to perform an accurate positioning of the light for recording and reproduction with respect to the optical information recording medium.

In the optical information recording/reproducing apparatus of the invention, the positioning region may be located on the incidence side for the recording-specific reference light and the reproduction-specific reference light with respect to the information recording layer. In this case, it is possible to prevent the light used for positioning from being disturbed by the information recording layer, and consequently it is possible to prevent deterioration in the reproduction accuracy of the information for positioning.

In the optical information recording/reproducing apparatus of the invention, the information light generating means may generate the information light by spatially modulating the recording-specific reference light having passed through the information recording layer based on the information to be recorded and reflecting the same. In this case, it is possible to simplify the configuration of the optical system for recording.

The optical information recording medium of the invention comprises: an information recording layer in which information is to be recorded through the use of holography; a first surface on which recording-specific reference light and reproduction-specific reference light are incident and from which reproduction light exits; a second surface on which information light carrying information to be recorded is incident; and a positioning region in which information for positioning the recording-specific reference light, the information light, and the reproduction-specific reference light is to be recorded, the positioning region being located on the first-surface side with respect to the information recording layer. Thus, according to the invention it is possible to arrange the information light, the recording-specific reference light and the reproduction-specific reference light coaxially, and apply the same to the optical information recording medium while letting them converge to become minimum in diameter at a position along the thickness of the optical information recording medium where the positioning region is provided. In this case, the information light can carry information with the entire cross section of the beam thereof. Thus, the invention makes it possible to record and reproduce information through the use of holography and simplify the configuration of the optical system for recording and reproduction without causing a reduction in the amount of information. Moreover, according to the invention, the positions of the information light, the recording-specific reference light and the reproduction-specific reference light with respect to the optical information recording medium can be controlled by using the information recorded in the positioning region. It is thus possible to perform an accurate positioning of the light for recording or reproduction with respect to the optical information recording medium.

It is apparent from the foregoing description that the invention may be carried out in various modes and may be modified in various ways. It is therefore to be understood that within the scope of equivalence of the appended claims the invention may be practiced in modes other than the foregoing best modes.

**Claims**

1. An optical information recording apparatus for recording information in an optical information recording medium having an information recording layer in which information is to be recorded through the use of holography, the apparatus comprising:

   information light generating means for generating information light carrying information to be recorded;
   recording-specific reference light generating means for generating recording-specific reference light; and
   a recording optical system for applying the information light generated by the information light generating means and the recording-specific reference light generated by the recording-specific reference light generating means to the information recording layer so that information is recorded in the information recording layer in the form of an interference pattern resulting from interference between the information light and the recording-specific reference light,

   wherein the recording optical system applies the information light and the recording-specific reference light coaxially to opposite sides of the information recording layer, letting the information light and the recording-specific reference light converge to become minimum in diameter at the same position.

2. An optical information recording apparatus according to claim 1, wherein:

   the optical information recording medium has a positioning region in which information for positioning the information light and the recording-specific reference light is to be recorded; and
   the recording optical system applies the information light and the recording-specific reference light, letting them converge to become minimum in diameter at a position along the thickness of the optical information recording medium where the positioning region is provided,
   the optical information recording apparatus further comprising position control means for controlling the positions of the information light and the recording-specific reference light with respect to the optical information recording medium by using the information recorded in the positioning region.

3. An optical information recording apparatus according to claim 2, wherein the positioning region is located on an incidence side for the recording-specific reference light with respect to the information recording layer.

4. An optical information recording apparatus according to claim 1, wherein the information light generating means generates the information light by spatially modulating the recording-specific reference light having passed through the information recording layer based on the information to be recorded and reflecting the same.

5. An optical information recording apparatus according to claim 1, wherein the information light generating means spatially modulates the intensity of light based on the information to be recorded.

6. An optical information recording apparatus according to claim 1, wherein the information light generating means spatially modulates the phase of light based on the information to be recorded.

7. An optical information recording apparatus according to claim 1, wherein the recording-specific reference light generating means generates the recording-specific reference light having a spatially modulated phase.

8. An optical information recording apparatus according to claim 1, wherein the recording-specific reference light generating means generates the recording-specific reference light having a spatially modulated phase, and the information light generating means spatially modulates the phase of light in accordance with a phase modulation pattern determined based on the information to be recorded and a phase modulation pattern of the recording-specific reference light.

9. An optical information recording method for recording information in an optical information recording medium having an information recording layer in which information is to be recorded through the use of holography, the method comprising:

   the step of generating information light carrying information to be recorded;
   the step of generating recording-specific reference light; and
   the recording step of applying the information light and the recording-specific reference light to the information recording layer so that information is recorded in the information recording layer in the form of an interference pattern resulting from interference between the information light and the recording-specific reference light, wherein
the recording step applies the information light and the recording-specific reference light coaxially to opposite sides of the information recording layer, letting the information light and the recording-specific reference light converge to become minimum in diameter at the same position.

10. An optical information reproducing apparatus for reproducing information through the use of holography from an optical information recording medium having an information recording layer in which information is recorded through the use of holography,

the optical information recording medium having a positioning region in which information for positioning reproduction-specific reference light is to be recorded, the positioning region being located on an incidence side for the reproduction-specific reference light with respect to the information recording layer, information being recorded in the information recording layer in the form of an interference pattern resulting from interference between information light and recording-specific reference light that are applied coaxially to opposite sides of the information recording layer, the information light and the recording-specific reference light converging to become minimum in diameter at a position along the thickness of the optical information recording medium where the positioning region is provided,
the optical information reproducing apparatus comprising:

reproduction-specific reference light generating means for generating the reproduction-specific reference light;
a reproducing optical system for applying the reproduction-specific reference light generated by the reproduction-specific reference light generating means to the information recording layer and for collecting reproduction light generated from the information recording layer upon application of the reproduction-specific reference light; and
detecting means for detecting the reproduction light collected by the reproducing optical system,

wherein the reproducing optical system applies the reproduction-specific reference light such that the reproduction-specific reference light becomes minimum in diameter at the position along the thickness of the optical information recording medium where the positioning region is provided, so that the application of the reproduction-specific reference light and the collection of the reproduction light are performed on an incidence side for the recording-specific reference light on the optical information recording medium, and that the reproduction-specific reference light and the reproduction light are arranged coaxially,
the optical information reproducing apparatus further comprising position control means for controlling the position of the reproduction-specific reference light with respect to the optical information recording medium by using the information recorded in the positioning region.

11. An optical information reproducing apparatus according to claim 10, wherein the reproduction light is light which is spatially modulated in intensity.

12. An optical information reproducing apparatus according to claim 10, wherein:

the reproduction light is light which is spatially modulated in phase;
the reproducing optical system generates composite light by superimposing the reproduction light on the reproduction-specific reference light; and
the detecting means detects the composite light.

13. An optical information reproducing apparatus according to claim 10, wherein the reproduction-specific reference light generating means generates the reproduction-specific reference light having a spatially modulated phase.

14. An optical information reproducing method for reproducing information through the use of holography from an optical information recording medium having an information recording layer in which information is recorded through the use of holography,

the optical information recording medium having a positioning region in which information for positioning reproduction-specific reference light is to be recorded, the positioning region being located on an incidence side for the reproduction-specific reference light with respect to the information recording layer, information being recorded in the information recording layer in the form of an interference pattern resulting from interference between information light and recording-specific reference light that are applied coaxially to opposite sides of the information recording layer, the information light and the recording-specific reference light converging to become minimum in diameter at a position along the thickness of the optical information recording medium where the positioning region is provided,
the optical information reproducing method comprising:

the step of generating the reproduction-specific reference light;
the reproducing step of applying the reproduction-specific reference light to the information recording layer and collecting reproduction light generated from the information recording layer upon application of the reproduction-specific reference light; and
the step of detecting the reproduction light collected by the reproducing optical system,

wherein the reproducing step applies the reproduction-specific reference light such that the reproduction-specific reference light becomes minimum in diameter at the position along the thickness of the optical information recording medium where the positioning region is provided, so that the application of the reproduction-specific reference light and the collection of the reproduction light are performed on an incidence side for the recording-specific reference light on the optical information recording medium, and that the reproduction-specific reference light and the reproduction light are arranged coaxially,
the optical information reproducing method further comprising the step of controlling the position of the reproduction-specific reference light with respect to the optical information recording medium by using the information recorded in the positioning region.

15. An optical information recording/reproducing apparatus for recording information in an optical information recording medium having an information recording layer in which information is to be recorded through the use of holography and for reproducing information from the optical information recording medium, the apparatus comprising:

information light generating means for generating information light carrying information to be recorded;

recording-specific reference light generating means for generating recording-specific reference light;
reproduction-specific reference light generating means for generating reproduction-specific reference light;
a recording/reproducing optical system for, when recording information, applying the information light generated by the information light generating means and the recording-specific reference light generated by the recording-specific reference light generating means to the information recording layer so that information is recorded in the information recording layer in the form of an interference pattern resulting from interference between the information light and the recording-specific reference light and, when reproducing information, applying the reproduction-specific reference light generated by the reproduction-specific reference light generating means to the information recording layer and collecting reproduction light generated from the information recording layer upon application of the reproduction-specific reference light; and
detecting means for detecting the reproduction light collected by the recording/reproducing optical system,

wherein the recording/reproducing optical system applies, when recording information, the information light and the recording-specific reference light coaxially to opposite sides of the information recording layer, letting the information light and the recording-specific reference light converge to become minimum in diameter at the same position, and, when reproducing information, applies the reproduction-specific reference light such that the reproduction-specific reference light becomes minimum in diameter at the position along the thickness of the optical information recording medium where the recording-specific reference light becomes minimum in diameter, so that the application of the reproduction-specific reference light and the collection of the reproduction light are performed on an incidence side for the recording-specific reference light on the optical information recording medium, and that the reproduction-specific reference light and the reproduction light are arranged coaxially.

16. An optical information recording/reproducing apparatus according to claim 15, wherein:

the optical information recording medium has a positioning region in which information for positioning the information light, the recording-specific reference light, and the reproduction-specific reference light is to be recorded; and

the recording/reproducing optical system applies the information light, the recording-specific reference light, and the reproduction-specific reference light, letting them converge to become minimum in diameter at a position along the thickness of the optical information recording medium where the positioning region is provided,

the optical information recording/reproducing apparatus further comprising position control means for controlling, when recording information, the positions of the information light and the recording-specific reference light with respect to the optical information recording medium by using the information recorded in the positioning region, and, when reproducing information, the position of the reproduction-specific reference light with respect to the optical information recording medium by using the information recorded in the positioning region.

17. An optical information recording/reproducing apparatus according to claim 16, wherein the positioning region is located on the incidence side for the recording-specific reference light and the reproduction-specific reference light with respect to the information recording layer.

18. An optical information recording/reproducing apparatus according to claim 15, wherein the information light generating means generates the information light by spatially modulating the recording-specific reference light having passed through the information recording layer based on the information to be recorded and reflecting the same.

19. An optical information recording/reproducing apparatus according to claim 15, wherein the information light generating means spatially modulates the intensity of light based on the information to be recorded.

20. An optical information recording/reproducing apparatus according to claim 15, wherein:

the information light generating means spatially modulates the phase of light based on the information to be recorded;

the recording/reproducing optical system generates composite light by superimposing the reproduction light on the reproduction-specific reference light; and

the detecting means detects the composite light.

21. An optical information recording/reproducing apparatus according to claim 15, wherein the recording-specific reference light generating means generates the recording-specific reference light having a spatially modulated phase, and the reproduction-specific reference light generating means generates the reproduction-specific reference light having a spatially modulated phase.

22. An optical information recording/reproducing apparatus according to claim 15, wherein:

the recording-specific reference light generating means generates the recording-specific reference light having a spatially modulated phase;

the information light generating means spatially modulates the phase of light in accordance with a phase modulation pattern determined based on the information to be recorded and a phase modulation pattern of the recording-specific reference light;

the reproduction-specific reference light generating means generates the reproduction-specific reference light having a spatially modulated phase;

the recording/reproducing optical system generates composite light by superimposing the reproduction light on the reproduction-specific reference light; and

the detecting means detects the composite light.

23. An optical information recording/reproducing method for recording information in an optical information recording medium having an information recording layer in which information is to be recorded through the use of holography and for reproducing information from the optical information recording medium, the method comprising:

the step of generating information light carrying information to be recorded;

the step of generating recording-specific reference light;

the recording step of applying the information light generated by the information light generating means and the recording-specific reference light generated by the recording-specific reference light generating means to the information recording layer so that information is recorded in the information recording layer in the form of an interference pattern resulting from interference between the information light and the recording-specific reference light;

the step of generating reproduction-specific reference light;

the reproducing step of applying the reproduction-specific reference light to the information recording layer and collecting reproduction light generated from the information recording layer upon application of the reproduction-specific reference light; and

the step of detecting the reproduction light, wherein:

the recording step applies the information light and the recording-specific reference light coaxially to opposite sides of the information recording layer, letting the information light and the recording-specific reference light converge to become minimum in diameter at the same position; and

the reproducing step applies the reproduction-specific reference light such that the reproduction-specific reference light becomes minimum in diameter at the position along the thickness of the optical information recording medium where the recording-specific reference light becomes minimum in diameter, so that the application of the reproduction-specific reference light and the collection of the reproduction light are performed on an incidence side for the recording-specific reference light on the optical information recording medium, and that the reproduction-specific reference light and the reproduction light are arranged coaxially.

24. An optical information recording medium comprising:

an information recording layer in which information is to be recorded through the use of holography;

a first surface on which recording-specific reference light and reproduction-specific reference light are incident and from which reproduction light exits;

a second surface on which information light carrying information to be recorded is incident; and

a positioning region in which information for positioning the recording-specific reference light, the information light, and the reproduction-specific reference light is to be recorded, the positioning region being located on the first-surface side with respect to the information recording layer.

FIG. 1

FIG. 2

FIG. 3

FIG. 4

F I G. 5

FIG. 6

EP 1 326 240 A1

FIG. 7

42

34

61
60
62

FIG. 8

72    A    71A  70    B    71B    C    71C

(a)

(b)

FIG. 9

FIG. 10

FIG. 11

FIG. 12

FIG. 13

FIG. 14

FIG. 15

FIG. 16

FIG. 17

FIG. 18

FIG. 19

FIG. 20

**FIG. 21**

FIG. 22A

FIG. 22B

FIG. 22C

FIG. 22D

FIG. 22E

FIG. 23

FIG. 24

FIG. 25A

FIG. 25B

FIG. 25C

FIG. 25D

FIG. 25E

FIG. 26

FIG. 27

FIG. 28

FIG. 29

| INTERNATIONAL SEARCH REPORT | | International application No. |
|---|---|---|
| | | PCT/JP01/08916 |

| A. CLASSIFICATION OF SUBJECT MATTER |
|---|
| Int.Cl⁷ G11B 7/09, 7/0065, 7/135, 7/24, G03H 1/26, 1/30 |
| According to International Patent Classification (IPC) or to both national classification and IPC |

| B. FIELDS SEARCHED |
|---|
| Minimum documentation searched (classification system followed by classification symbols) |
| Int.Cl⁷ G11B 7/09, 7/095, 7/0065, 7/135, 7/24, G03H 1/26, 1/30 |
| Documentation searched other than minimum documentation to the extent that such documents are included in the fields searched |
| Jitsuyo Shinan Koho 1922-1996 Toroku Jitsuyo Shinan Koho 1994-2002 |
| Kokai Jitsuyo Shinan Koho 1971-2002 Jitsuyo Shinan Toroku Koho 1996-2002 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 6-266275 A (TOPPAN PRINTING CO., LTD.),<br>22 September, 1994 (22.09.94),<br>Full text; Figs. 1 to 6<br>Full text; Figs. 1 to 6<br>& DE 4438656 A | 1,5-9<br>2-4,10-24 |
| X<br>A | JP 11-126335 A (Sony Corporation),<br>11 May, 1999 (11.05.99),<br>Full text; Figs. 1 to 34<br>Full text; Figs. 1 to 34<br>(Family: none) | 24<br>1-23 |
| A | JP 10-293520 A (Sony Corporation),<br>04 November, 1998 (04.11.98),<br>Full text; Figs. 1 to 13 (Family: none) | 1-24 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 January, 2002 (07.01.02) | 15 January, 2002 (15.01.02) |

| Name and mailing address of the ISA/ | Authorized officer |
|---|---|
| Japanese Patent Office | |
| Facsimile No. | Telephone No. |

Form PCT/ISA/210 (second sheet) (July 1992)